(19) Europäisches Patentamt
European Patent Office
Office européen des brevets

(11) **EP 3 101 244 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(51) Int Cl.:
***F01M 13/04*** (2006.01)     ***F16J 15/06*** (2006.01)

(21) Anmeldenummer: **16168046.7**

(22) Anmeldetag: **03.05.2016**

(54) **DICHTELEMENT, RINGFILTERELEMENT, ÖLABSCHEIDER SOWIE VERFAHREN ZUM ÖFFNEN DES FILTERGEHÄUSES EINES ÖLABSCHEIDERS**

SEALING ELEMENT, RING FILTER ELEMENT, OIL SEPARATOR AND METHOD FOR OPENING THE FILTER HOUSING OF AN OIL SEPARATOR

ÉLEMENT D'ETANCHEITE, ELEMENT DE FILTRE ANNULAIRE, SEPARATEUR D'HUILE ET PROCEDE D'OUVERTURE D'UN CARTER DE FILTRE D'UN SEPARATEUR D'HUILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2015 DE 102015006767**

(43) Veröffentlichungstag der Anmeldung:
**07.12.2016 Patentblatt 2016/49**

(73) Patentinhaber: **MANN + HUMMEL GMBH**
**71636 Ludwigsburg (DE)**

(72) Erfinder:
• **Zürker, Markus**
**67373 Dudenhofen (DE)**

• **Melde, Markus**
**67346 Speyer (DE)**
• **Ehrhardt, Philipp**
**76297 Stutensee (DE)**

(74) Vertreter: **Mann + Hummel Intellectual Property Mann + Hummel**
**International GmbH & Co. KG**
**Schwieberdinger Straße 126**
**71636 Ludwigsburg (DE)**

(56) Entgegenhaltungen:
EP-A1- 2 272 580     WO-A1-2015/047738
DE-A1- 2 231 896     DE-A1- 3 016 231
DE-A1-102009 005 551     US-A1- 2010 031 940
US-A1- 2014 208 702

**Beschreibung**

**Technisches Gebiet**

Die Erfindung betrifft einen Ölabscheider eines K[urbel]G[ehäuse]E[ntlüftungs]-Systems mit einem Ringfilterelement, wobei das Ringfilterelement zum Abscheiden von Öl aus Fluid, insbesondere aus Aerosol, ausgebildet ist.

Die Erfindung betrifft des Weiteren ein Ringfilterelement nach dem Oberbegriff des Anspruchs 6, sowie ein Verfahren nach dem Oberbegriff des Anspruchs 11.

**Stand der Technik**

Bei Hubkolbenverbrennungsmotoren entsteht im Kurbelgehäuse ein ölhaltiges Leckagegas - das sog. Blow-By. Seine Zurückführung in den Verbrennungsprozess ist weltweit gesetzlich vorgeschrieben und erfolgt in sogenannten geschlossenen K[urbel]G[ehäuse]E[ntlüftungs]-Systemen. Zu den wichtigsten Aufgaben eines K[urbel]G[ehäuse]E[ntlüftungs]-Systems gehören die Ölabscheidung und die Ölrückführung in das Kurbelgehäuse sowie die Regelung des Kurbelgehäusedrucks. Die Anforderungen an die Ölabscheidung ist dabei in den vergangenen Jahren mit der strenger werdenden Abgasgesetzgebung stetig gestiegen, um emissionsrelevante Motorkomponenten wie Abgasturbolader, Ladeluftkühler oder Sensoren vor einem Leistungsverlust durch Ölkontamination zu schützten. Somit liegt die Bedeutung der Ölabscheidung nicht allein in der Minimierung des Ölverbrauchs, sondern sie leistet heute vor allem einen wesentlichen Beitrag zur Einhaltung der Abgasgesetzgebung über die Fahrzeuglebensdauer. Neben der Ölabscheidung enthält ein K[urbel]G[ehäuse]E[ntlüftungs]-System je nach Entlüftungskonzept weitere wichtige Komponenten wie zum Beispiel ein D[ruck]R[egel]V[entil].

Die Kurbelgehäuseentlüftung besitzt zwei Räume die voneinander getrennt werden müssen, nämlich eine Rohseite, auf der sich das ungereinigte Blow-By Gas befindet, und eine Reinseite, auf der sich das gereinigte Gas befindet.

Neben dem Trennen und Abdichten der Rohseite von der Reinseite müssen die Rohseite und die Reinseite zusätzlich zur Atmosphäre abgetrennt und abgedichtet werden.

Diese drei Dichtungsfunktionen geschehen nach dem Stand der Technik überwiegend durch drei einzelne Dichtungen, zum Beispiel durch drei einzelne O-Ringe oder drei einzelne Formdichtungen.

Neben einzelnen Dichtungen, die jeweils nur eine Dichtungsfunktion erfüllen, sind im Stand der Technik auch so genannte kombinierte Dichtungen bekannt, die mehr als eine Dichtungsfunktion erfüllen. So offenbart die EP 2 272 580 A1 eine kombinierte Dichtung (vgl. Bezugszeichen 25 der Figur 1 der EP 2 272 580 A1) für einen Filtereinsatz eines K[urbel]G[ehäuse]E[ntlüftungs]-Systems, wobei diese kombinierte Dichtung zwei zusammenhängende Dichtelemente aufweist, die jeweils in radialer Richtung des Filtereinsatzes wirken und axial voneinander beabstandet sind.

Des Weiteren ist aus der DE 10 2010 063 161 A1 eine Fluidfiltereinrichtung mit einer radial wirkenden kombinierten Dichtung bekannt. Diese kombinierte Dichtung wirkt zwischen einem Ringfilterelement und einem koaxial auf das Ringfilterelement aufgesteckten Dom und erfüllt zwei Dichtungsfunktionen. Einerseits dichtet diese kombinierte Dichtung die Rohseite der Fluidfiltereinrichtung gegenüber einem Rücklauf ab und Andererseits dichtet diese kombinierte Dichtung die Rohseite der Fluidfiltereinrichtung gegenüber der Reinseite der Fluidfiltereinrichtung ab.

Ferner ist aus der DE 20 2006 017 61 U1 ein Flüssigkeitsfilter mit einer radial wirkenden Dichtung bekannt, welche eine obere Endscheibe eines Ringfilterelements gegen den Rohrkörper eines zum Stützen des Ringfilterelements ausgebildeten Stützdoms abdichtet.

Dokument DE 10 2009 005 551 A zeigt einen Flüssigkeitabscheider zum Reinigen von Kurbelgehäusegasen.

Der Erfindung liegt die Aufgabe zugrunde, ein Ringfilterelement der eingangs genannten Art, einen Ölabscheider der eingangs genannten Art sowie ein Verfahren der eingangs genannten Art derart weiterzubilden, dass das Dichtelement mehr als eine Dichtungsfunktion erfüllt und dennoch einfach handhabbar, insbesondere einfach austauschbar, ist.

**Offenbarung der Erfindung**

Diese Aufgabe wird durch ein Ringfilterelement mit den im Anspruch 6 angegebenen Merkmalen, durch einen Ölabscheider mit den im Anspruch 1 angegebenen Merkmalen sowie durch ein Verfahren mit den im Anspruch 11 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung darauf, ein einteiliges Dichtelement bereitzustellen, das sowohl eine radiale Dichtungsfunktion als auch eine axiale Dichtungsfunktion erfüllt, wobei der radial dichtende Bereich und der axial dichtende Bereich zusammenhängend ausgebildet sind.

Radial bedeutet vorliegend in Richtung des Radius des Ringfilterelements. Axial bedeutet vorliegend in Richtung der Längsachse des Ringfilterelements.

Erfindungsgemäss weist der Olabscheider ein zum Aufnehmen des Ringfilterelements ausgebildetes Filtergehäuse auf. Dieses Filtergehäuse ist vorteilhafterweise im Querschnitt rund, beispielsweise kreisrund oder oval, ausgebildet.

Erfindungsgemäss ist der axial dichtende Bereich zwischen zwei Teilen des Filtergehäuses angeordnet und der radial dichtende Bereich innerhalb des Filtergehäuses angeordnet.

Der Innenraum des Filtergehäuses ist durch das Ringfilterelement in einen ungefiltertes Fluid aufweisenden Rohraum oder eine Rohseite und in einen gefiltertes Fluid aufweisenden Reinraum oder eine Reinseite unterteilt.

Erfindungsgemäss weist das Dichtelement die beiden Dichtebereiche, nämlich den radial dichtenden Bereich und den axial dichtenden Bereich, auf, um die Rohseite des Ölabscheiders von der Reinseite des Ölabscheiders abzudichten sowie um den Innenraum des Ölabscheiders gegenüber der Umgebung abzudichten.

Beispielsweise kann der radial dichtende Bereich dazu ausgebildet sein die Rohseite gegenüber der Reinseite abzudichten und der axial dichtende Bereich dazu ausgebildet sein den Innenraum des Filtergehäuses gegenüber der Umgebung oder gegenüber der Atmosphäre abzudichten.

Bei dieser besonders vorteilhaften Ausgestaltung der vorliegenden Erfindung ist das Dichtelement derart ausgebildet, dass es in seiner Gebrauchsstellung drei Dichtungsfunktionen oder Dichtungsaufgaben erfüllt, nämlich

a) die Rohseite zur Atmosphäre abdichtet
b) die Reinseite zur Atmosphäre abdichtet und
c) die Reinseite von der Rohseite abdichtet.

Um den radial dichtenden Bereich und den axial dichtenden Bereich funktional zu entkoppeln, ist der radial dichtende Bereich mit insbesondere axialem und/oder radialem Abstand zum axial dichtenden Bereich angeordnet. Auf diese Weise sind die beiden Dichtbereiche in ihrer Funktion unabhängig und doch in einem Teil integriert. Auf diese Weise kann die Dichtungsfunktion des Abdichtens der Rohseite bzw. der Reinseite zur Atmosphäre von der Dichtungsfunktion des Abdichtens der Reinseite von der Rohseite entkoppelt werden. Die Beabstandung der dichtenden Bereiche wird vorteilhaft mittels eines Verbindungssteges erreicht, der die beiden dichtenden Bereiche verbindet. Der Verbindungssteg weist bevorzugt die Form eines kurzen, rohrförmigen Hohlzylinderabschnittes auf. Dieser kann bevorzugt relativ dünn ausgeführt werden, beispielsweise dünner als die Querschnitte der dichtenden Bereiche. Der Verbindungssteg kann ferner einen L-förmigen Querschnitt aufweisen. Dies bedeutet, dass von der oben genannten hohlzylindrischen Form, die einen Schenkel des Ls bildet, ein weiterer Schenkel nach radial innen oder außen ragt, der somit einen kreisringscheibenförmigen, zweiten Verbindungsstegabschnitt bildet. Auf diese Weise wird bevorzugt zusätzlich zum axialen Abstand zwischen den dichtenden Bereichen noch ein radialer Abstand ermöglicht. Dies ermöglicht, dass ein Gehäuseoberteil oder Deckel in einem engen Bauraumbereich unabhängige, zu den dichtenden Bereichen korrespondierende Dichtflächen bereitstellen kann, beispielsweise, indem das Gehäuseoberteil bzw. der Gehäusedeckel ebenfalls einen im Bereich des Dichtelements ebenfalls abschnittsweise L-förmigen Querschnitt aufweist, wobei der axiale Schenkel eine Anlagefläche für den radial dichtenden Bereich und der radiale Schenkel eine Anlagefläche für den axial dichtenden Bereich des Dichtelements bereitstellt.

Ein Abstand zwischen dem radial dichtenden Bereich und dem axial dichtenden Bereich ermöglicht zudem den radial dichtenden Bereich innerhalb des Filtergehäuses des Ölabscheiders anzuordnen und den axial dichtenden Bereich zwischen zwei Gehäuseteilen oder Gehäusehälften des Filtergehäuses des Ölabscheiders anzuordnen.

Erfindungsgemäss sind der radial dichtende Bereich und der axial dichtende Bereich in Richtung der Längsachse des Ringfilterelements versetzt zueinander angeordnet, ferner ist der radial dichtende Bereich der Strömungsrichtung des zu filternden Fluids folgend oberhalb des axial dichtenden Bereichs angeordnet.

Vorteilhafterweise weist der axial dichtende Bereich auf dessen vom radial dichtenden Bereich abgewandten Seite einen zylinderrohrförmigen Fortsatz auf, welcher am Ende auf der Außenseite eine Einführschräge aufweist. So wird ein Einbau des Dichtelements bzw. eines Filterelements mit einem solchen Dichtelement in ein korrespondierendes Gehäuse vereinfacht.

Zum Abführen des gefilterten Reinfluids weist ein erster oder oberer Gehäuseteil des Filtergehäuses vorteilhafterweise einen Reinfluidauslass auf. Vorteilhafterweise ist der radial dichtende Bereich des Dichtelements auf gleicher Höhe mit dem ersten oder oberen Gehäuseteil, insbesondere mit dem Reinfluidauslass, angeordnet. Dies ermöglicht es den oberen Gehäuseteil von einem weiteren Gehäuseteil, insbesondere von einem zur Aufnahme des Ringfilterelements ausgebildeten Gehäusekörper, zu demontieren, indem der obere Gehäuseteil mittels einer Kippbewegung oder mittels einer Rotationsbewegung um eine senkrecht zur Längsachse des Ringfilterelements verlaufende Rotationsachse bewegt wird. Beim Stand der Technik kann der erste oder obere Gehäuseteil dagegen nur mittels einer axialen Bewegung, also einer Bewegung entlang der Längsachse des Ringfilterelements, demontiert werden. Das Öffnen des Filtergehäuses mittels einer Kippbewegung erleichtert das Auswechseln des Ringfilterelements, da das erste oder obere Gehäuseteil auf der Gehäusekante des weiteren Gehäuseteils, insbesondere des Gehäusekörpers, gestützt werden kann.

Um den Innenraum des Filtergehäuses gegenüber der Umgebung oder gegenüber der Atmosphäre abzudichten, ist der axial dichtende Bereich vorteilhafterweise derart zwischen dem ersten oder oberen Gehäuseteil und dem weiteren Gehäuseteil, insbesondere dem zur Aufnahme des Ringfilterelements ausgebildeten Gehäusekörper, anordbar, dass der axial dichtende Bereich mittels einer definierten Kraft axial zwischen dem ersten oder oberen Gehäuseteil und dem Gehäusekörper verpresst ist.

Zum Abscheiden von Öl aus Fluid, insbesondere aus einem Aerosol, weist das Ringfilterelement vorteilhafterweise mindestens ein ringförmig, insbesondere kreisringförmig oder ovalringförmig, angeordnetes, beispielsweise gewickeltes Filtermedium auf.

Als Filtermedium können zum Beispiel Papiere oder Vliese aus Metallfasern, Glasfasern oder Kunststofffasern, insbesondere Polyesterfasern verbaut werden. Auch die Kombination der genannten Materialien ist möglich. Des Weiteren kann das Filtermedium, wie in der DE 10 2011 016 893 A1 beschrieben, als Koaleszenzmedium ausgebildet sein.

Um das Filtermedium möglichst stabil gegen von außen auf das Filtermedium wirkende Kräfte auszubilden, weist das Filtermedium vorteilhafterweise einen ovalen, insbesondere kreisrunden Querschnitt auf. Bei einer vorteilhaften Ausführungsform des K[urbel]G[ehäuse]E[ntlüftungs]-Systems weist auch das aus mindestens einem Gehäuseteil gebildete und zur Aufnahme des Filtermediums ausgebildete Gehäuse des K[urbel]G[e-häuse]E[ntlüftungs]-Systems einen ovalen, insbesondere kreisrunden Querschnitt auf.

Das Filtermedium hat eine sich parallel zur Strömungsrichtung des das Filtermedium durchströmenden Fluids erstreckende Deckfläche und mindestens eine an der Deckfläche angeordnete Endscheibe.

Diese Endscheibe ist vorteilhafterweise dazu ausgebildet die Rohseite des Filtergehäuses, insbesondere des Gehäusekörpers, von der Reinseite des Filtergehäuses, insbesondere des ersten oder oberen Gehäuseteils, zu trennen.

Das Dichtelement ist vorteilhafterweise an der Endscheibe lösbar oder unlösbar befestigbar. Wenn das Dichtelement an der Endscheibe befestigt ist, kann es beim Auswechseln des Ringfilterelements in einem Arbeitsschritt gemeinsam mit dem Ringfilterelement ausgewechselt werden. Ein weiterer Vorteil des Befestigens des Dichtelements am Ringfilterelement ist, dass das Dichtelement werkseitig vormontiert werden kann und somit Bedienungsfehler beim Austauschen des Dichtelements vermieden werden.

Zum Befestigen des Dichtelements am Filterelement kann die Endscheibe eine Befestigungskontur, insbesondere eine Nut, aufweisen, in welcher der radial dichtende Bereich des Dichtelements anordbar, insbesondere festklemmbar, ist. Alternativ kann das Dichtelement an die Endscheibe in einem Zweikomponentenspritzgussverfahren angebracht sein.

Alternativ zur Befestigung an der Endscheibe kann das Dichtelement auch am ersten oder oberen Gehäuseteil des Filtergehäuses befestigt werden. So kann das Dichtelement in das obere Gehäuseteil eingeknüpft werden oder das obere Gehäuseteil kann von dem Dichtelement umspritzt werden.

Zum Stabilisieren des Dichtelements kann die Endscheibe eine sich in Richtung der Längsachse des Ringfilterelements erstreckende Stützkontur aufweisen. Diese Stützkontur ist dazu ausgebildet, eine dem Ringfilterelement zugewandte Seite, beispielsweise eine Nase, des axial dichtenden Bereichs des Dichtelements zu führen und/oder zu halten. Auf diese Weise kann verhindert werden, dass das Dichtelement, insbesondere ein Bereich oder eine Nase des axial dichtenden Bereichs, sich der Strömungsrichtung des Fluids folgend zum Filtermedium hin bewegt und nach innen umklappt.

Der radial dichtende Bereich ist vorteilhafterweise derart zwischen dem Filtergehäuse, insbesondere dem ersten oder oberen Gehäuseteil, und dem Ringfilterelement, insbesondere der Endscheibe des Ringfilterelements, anordbar, dass der radial dichtende Bereich mittels einer definierten Kraft radial zwischen dem Filtergehäuse und dem Ringfilterelement, insbesondere zwischen dem oberen Gehäuseteil und der Endscheibe, verpresst ist.

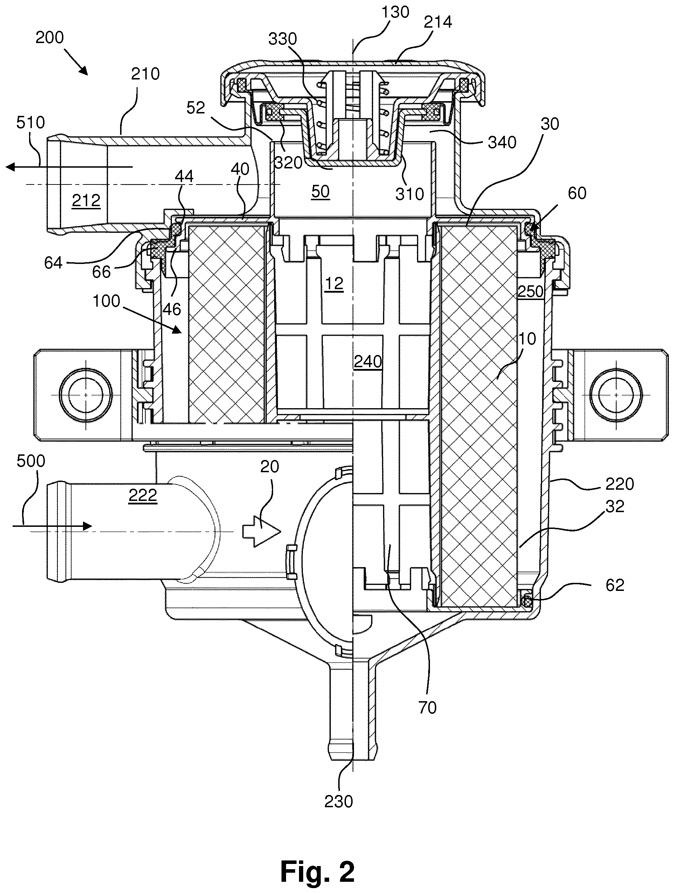

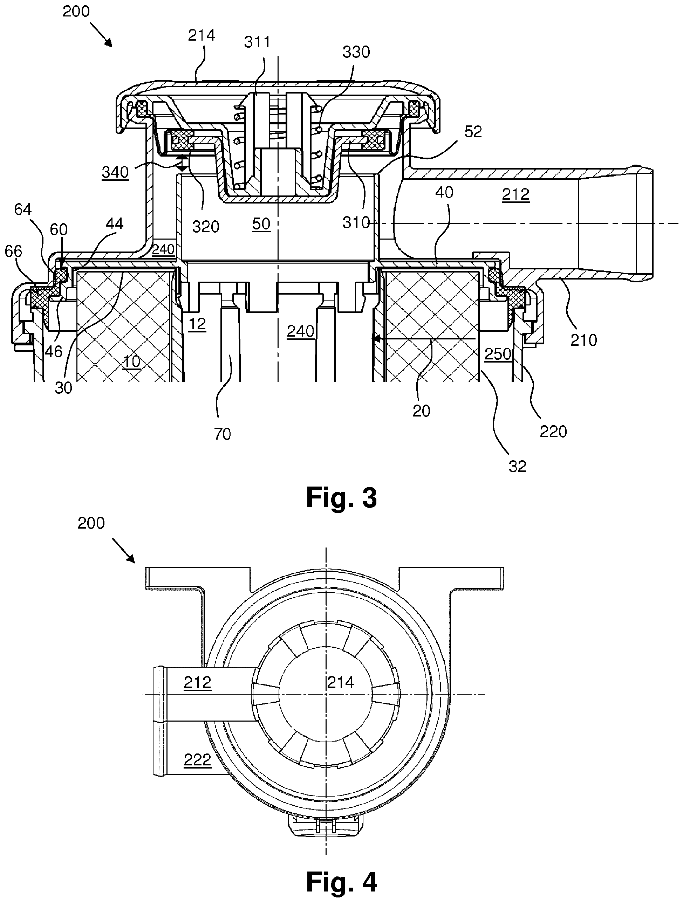

Um den radial dichtende Bereich mittels einer definierten Kraft zwischen dem Filtergehäuse und dem Ringfilterelement, insbesondere zwischen dem oberen Gehäuseteil und der Endscheibe, zu verpressen, ist das obere Gehäuseteil vorteilhafterweise derart ausgebildet, dass das obere Gehäuseteil in seiner Gebrauchsstellung zumindest einen Bereich des Ringfilterelements, insbesondere die Endscheibe des Ringfilterelements, insbesondere die Ringnut derart umgibt, dass das obere Gehäuseteil den Gegenpart zur Dichtung bildet (vgl. Figuren 2 und 3).

Bei einem Ausführungsbeispiel, bei dem der radiale Dichtbereich und der axiale Dichtbereich wie vorstehend beschrieben mittels einer definierten Kraft verpresst sind, kann das Dichtelement in seiner Gebrauchsstellung

- den Innenraum des ersten oder oberen Gehäuseteils, insbesondere die Reinseite, zur Umgebung abdichten,
- den Innenraum des Gehäusekörpers, insbesondere die zwischen Ringfilterelement und Gehäusekörper angeordneten Rohseite, zur Umgebung abdichten und
- die Rohseite gegenüber der Reinseite abdichten.

In einer bevorzugten Weiterbildung weist das Abdeckelement des (Ring-)Filterelements mindestens ein aus dem Inneren des Filterelements heraus leitendes, insbesondere sich vom Filterelement weg erstreckendes, insbesondere rohrförmiges, zum Abführen des gereinigten Fluids, insbesondere von Reinluft, ausgebildetes Reinfluidableitelement auf. Die vom Filterelement abgewandte Endfläche dieses Reinfluidableitelements ist als Dichtfläche für ein Ventil des K[urbel]G[ehäuse]E[ntlüftungs]-Systems ausgebildet oder weist eine Dichtfläche für ein Ventil dieses K[urbel]G[ehäuse]E[ntlüftungs]-System auf. Vorzugsweise ist die Dichtfläche als Ventilsitz für einen Ventilschließkörper, insbesondere für ein den Ventilschließkörper umgebendes Ventilschließkörper-Dichtelement, eines Druckregelventils ausgebildet. Neben der Funktion des Ableitens oder Abführens des gereinigten Fluids übernimmt das Reinfluidableitelement somit eine weitere Funktion, nämlich eine Dichtfunktion.

Die Dichtfläche ist dabei im Wesentlichen eben und gratfrei, wobei die Enden, Ränder oder Kanten der Dichtfläche abgerundet sein können. Ferner ist die Dichtfläche bevorzugt rund, insbesondere kreisrund ausgeführt.

Durch die Anordnung der Dichtfläche am Reinfluidableitelement wie beschrieben ist die Dichtfläche und die durch diese definierte Ebene bevorzugt beabstandet von der axialen, äußeren Oberfläche des Abdeckelementes. Diese Anordnung definiert gleichermaßen den Abstand des Ventils von dem Abdeckelement. Innerhalb dieses Abstandes kann vorteilhaft der Reinfluidauslass des Ölabscheidergehäuses, in welchem das Filterelement einzubauen ist, bauraumgünstig angeordnet werden. Für eine strömungsgünstige Gesamtauslegung ist es daher bevorzugt, wenn die Länge des Reinfluidableitelements gemessen von der axialen, äußeren Oberfläche des Abdeckelementes, etwa dem Durchmesser des Reinfluidauslasses des Ölabscheidergehäuses entspricht.

Das Abdeckelement ist bevorzugt als eine Endscheibe des Filterelements ausgebildet. Diese ist mit dem Filtermedium an einer Stirnseite des Filterelements dichtend und unlösbar verbunden, beispielsweise durch Kleben oder Schweißen. Das Abdeckelement ist bevorzugt aus thermoplastischem Kunststoff, bevorzugt durch Spritzgießen hergestellt.

Das Reinfluidableitelement ist bevorzugt unlösbar (d. h. nicht zerstörungsfrei lösbar) und dichtend mit dem Abdeckelement verbunden, so dass die Rohseite von der Reinseite getrennt ist. Das Reinfluidableitelement ist besonders bevorzugt einstückig mit dem Abdeckelement ausgebildet.

Reinfluidableitelement und Abdeckelement sind bevorzugt umlaufend geschlossen ausgeführt. Dies bedeutet, dass das Reinfluidableitelement und das Abdeckelement so verbunden und ausgestaltet sind, dass außer der durch die Dichtfläche umgebenen Reinfluidaustrittsöffnung keine weitere Öffnung in Abdeckelement und Reinfluidableitelement vorhanden sind.

Das Reinfluidableitelement ist bevorzugt ein ovalzylindrisches, insbesondere kreiszylindrisches, insbesondere gerades Rohr. Dieses Rohr weist eine geschlossene zylindrische Wandung und zwei offene Enden auf, wobei an einem, von dem Abdeckelement abgewandten Ende die Dichtfläche ausgebildet ist und das andere Ende mit dem Abdeckelement verbunden ist, so dass eine fluidische Verbindung zum Innenraum des Filtermediums bzw. des Filterkörpers gebildet ist. Die Enden sind bevorzugt senkrecht zur Mittelachse orientiert.

In einer besonders bevorzugten Weiterbildung ist das Abdeckelement als ringförmige Endscheibe ausgebildet, von welcher sich das als Rohr ausgebildete Reinfluidableitelement auf der dem Filtermedium abgewandten Seite weg erstreckt.

Reinfluidelement und Abdeckelement bilden bevorzugt einen L- oder T-förmigen Querschnitt.

Ein bevorzugtes Ausführungsbeispiel des Filterelements der vorliegenden Erfindung weist ein Reinfluidableitelement auf, dessen Endfläche derart eben und/oder gratfrei ausgebildet ist, dass sie als Dichtfläche, insbesondere als Ventilsitz, für einen Ventilschließkörper eines Druckregelventils des Kurbelgehäuseentlüftungssystems, dienen kann.

Der Fachmann wird das Filterelement der vorliegenden Erfindung insbesondere beim Einsatz in einem Kurbelgehäuseentlüftungssystem mit integrierter Druckregelung oder mit integriertem Druckregelventil zu schätzen wissen. Das Filterelement kann nämlich mittels der erfindungsgemäßen Dichtfläche neben dem Abscheiden von Öl aus Aerosol eine weitere Funktion, nämlich eine Teilfunktion der Druckregelung übernehmen. Dabei kann die Dichtfläche des Filterelements als Ventilsitz für den Ventilschließkörper des Druckregelventils dienen. Die Dichtfläche kann also dazu ausgebildet sein, an der Regelung des Kurbelgehäusedrucks, insbesondere an der Begrenzung des Unterdrucks des K[urbel]G[ehäuse]E[ntlüftungs]-Systems, mitzuwirken.

Die Dichtfläche des Filterelements der vorliegenden Erfindung ermöglicht es, den Bauraum des K[urbel]G[ehäuse]E[ntlüftungs]-Systems im Vergleich zum, beispielsweise in den Druckschriften DE 10 2013 005 624 A1 und WO 2005 088 417 A1 offenbarten, Stand der Technik, bei dem der Ventilsitz des Druckregelventils an einer Gehäuseseitenwand des K[urbel]G[ehäuse]E[ntlüftungs]-Systems angeordnet ist, deutlich zu reduzieren. So können aufgrund der Dichtfläche des erfindungsgemäßen Filterelements die Komponenten des zur Regelung des Kurbelgehäusedrucks ausgebildeten Druckregelventils in das obere Gehäuseteil des K[urbel]G[ehäuse]E[ntlüftungs]-Systems aufgenommen werden.

Eine weitere Bauraumreduktion kann dadurch erreicht werden, dass das Filterelement dazu ausgelegt ist, von außen nach innen durchströmt zu werden und im Inneren des Filtermediums einen zum Abführen des gereinigten Fluids ausgebildeten Hohlraum aufweist. So muss im Gegensatz zum Stand der Technik, bei dem das Filtermedium von innen nach außen durchströmt wird, kein Kanal vorgesehen werden, mittels dessen das Fluid in das Innere des Filtermediums gelangen kann.

Der im Inneren des Filtermediums angeordnete und zum Abführen des Fluids ausgebildete Hohlraum ist vorteilhafterweise direkt mit dem Reinfluidableitelement verbunden oder geht direkt in einen zum Abführen des Fluids ausgebildeten Hohlraum des Reinfluidableitelements über.

Um das Filtermedium möglichst stabil gegen von außen auf das Filtermedium wirkende Kräfte auszubilden, weist das Filtermedium vorteilhafterweise einen ovalen, insbesondere kreisförmigen Querschnitt auf. Bei einer vorteilhaften Ausführungsform des K[urbel]G[ehäuse]E[ntlüftungs]-Systems weist auch das aus mindestens einem Gehäuseteil gebildete und zur Aufnahme des Filtermediums ausgebildete Gehäuse des K[urbel]G[e-häuse]E[ntlüftungs]-Systems einen ovalen, insbesondere kreisförmigen Querschnitt auf.

Als Filtermedium kann grundsätzlich jedes beliebige Material, insbesondere Vlies, zum Beispiel aus Metallfaser, Glasfaser und/oder Kunststofffaser, beispielsweise aus Polyester, verbaut werden. Auch die Kombination der genannten Materialien ist möglich. Des Weiteren kann das Filtermedium, wie in der DE 10 2011 016 893 A1 beschrieben, als Koaleszenzmedium ausgebildet sein. Bevorzugt ist das Filterelement als ringförmiges Koaleszenzelement ausgebildet. Hierzu weist das Filterelement bevorzugt als Vlies ausgebildetes Filtermedium auf, das bevorzugt mehrfach und damit mehrlagig ringförmig um ein Stützrohr herum gewickelt ist. Dies bedeutet, dass das Filtermedium bevorzugt als mindestens ein Vlieswickel ausgebildet ist. Zur Stabilisierung und Abdichtung ist weiter bevorzugt stirnseitig jeweils ein Abdeckelement, bevorzugt als Endscheibe ausgebildet, vorgesehen.

Der Ölabscheider ist bevorzugt wie beschrieben als Koaleszenzfilter ausgebildet. Das K[urbel]G[ehäuse]E[ntlüftungs]-System kann als geschlossenes K[urbel]G[ehäuse]E[ntlüftungs]-System, bei dem das Rein-Leckage-Gas in den Verbrennungsprozess zurückgeführt wird, oder als offenes K[urbel]G[ehäuse]E[ntlüftungs]-System ausgebildet sein.

Die Dichtfläche des Filterelements ist besonders stabil und kann besonders einfach hergestellt werden, wenn die Dichtfläche, das Reinfluidableitelement und das Abdeckelement wie bevorzugt einstückig ausgebildet sind.

Unabhängig hiervon oder in Verbindung hiermit ist bei einem bevorzugten Ausführungsbeispiel des Filterelements der vorliegenden Erfindung die Dichtfläche und/oder die Endscheibe aus einem mechanisch festen und/oder steifen Material gebildet, beispielsweise aus Polyamid 66 mit 35 % Glasfaser (PA 66 GF35).

Um die Dichtheit des Druckregelventils zu verbessern, weist der Ventilschließkörper zumindest an seinem in Kontakt mit dem Ventilsitz des Filterelements anordbaren Bereich mindestens ein elastisch ausgebildetes Ventilschließkörper-Dichtelement auf.

Das Dichtelement des Ventilschließkörpers weist vorteilhafterweise im Wesentlichen mindestens ein Elastomer auf. Insbesondere kann das Ventilschließkörper-Dichtelement aus mindestens einem Elastomer, beispielsweise aus Ethylen-Acrylat-Kautschuk (AEM) und/oder aus insbesondere hydriertem Nitrilkautschuk ([H]NBR) und/oder aus Acrylat-Kautschuk (ACM) gebildet sein. Im Vergleich zum Stand der Technik, bei dem die Abdichtung des Ventilsitzes und des Ventilschließkörpers ausschließlich durch harte Komponenten erfolgt, kann durch die elastische Ausbildung des Ventilschließkörper-Dichtelements die Dichtigkeit des Druckregelventils wesentlich verbessert werden.

Bei einem vorteilhaften Ausführungsbeispiel eines Ölabscheiders der vorliegenden Erfindung geschieht die Abdichtung weich auf hart. So sind beispielsweise der Ventilschließkörper und das Reinfluidableitelement, insbesondere der Ventilsitz, im Wesentlichen aus Polyamid 66 mit 35 % Glasfaser (PA 66 GF35) und das Ventilschließkörper-Dichtelement im Wesentlichen aus Ethylen-Acrylat-Kautschuk (AEM) und/oder aus Acrylat-Kautschuk (ACM) gebildet.

Die Dichtigkeit des Druckregelventils kann zudem dadurch verbessert werden, dass das Dichtelement des Ventilschließkörpers fest oder unlösbar mit dem Ventilschließkörper verbunden ist, insbesondere mittels mindestens eines Spritzverfahrens auf den Ventilschließkörper aufgebracht ist. Ventilschließkörper-Dichtelement und Ventilschließkörper bilden also vorteilhafterweise eine Einheit. Bei einer vorteilhaften Ausführungsform der vorliegenden Erfindung ist das Ventilschließkörper-Dichtelement nicht, wie aus dem Stand der Technik bekannt, in den Ventilkörper eingeknüpft, sondern der Ventilkörper ist vom Ventilschließkörper-Dichtelement umspritzt und bildet eine feste Einheit mit dem Ventilschließkörper-Dichtelement.

Ein weiteres Abgrenzungskriterium eines vorteilhaften Ausführungsbeispiels eines Ölabscheiders der vorliegenden Erfindung gegenüber dem Stand der Technik ist also, dass der Ventilschließkörper und das Ventilschließkörper-Dichtelement fest miteinander verbunden sind. Das Ventilschließkörper-Dichtelement bildet dabei eine feste Einheit mit dem Ventilschließkörper, was die Dichtigkeit verbessert.

Eine besonders hohe Dichtigkeit des Druckregelventils kann auch dadurch erreicht werden, dass der Ventilschließkörper an seinem dem Ventilsitz zugewandten Bereich, insbesondere an seinem in Kontakt mit dem Ventilsitz des Filterelements anordbaren Bereich, flach oder eben ausgebildet ist. Im Gegensatz hierzu ist beim Stand der Technik der Ventilschließkörper an seinem dem Ventilsitz zugewandten Bereich üblicherweise tellerförmig gewölbt ausgebildet. Im Gegensatz zur Tellerform beim Stand der Technik weist der Ventilschließkörper, insbesondere das Ventilschließkörper-Dichtelement, eines optimierten Ausführungsbeispiels eines Ölabscheiders der vorliegenden Erfindung also eine flache bzw. ebene Form auf, welches das Abdichtverhalten stark verbessert.

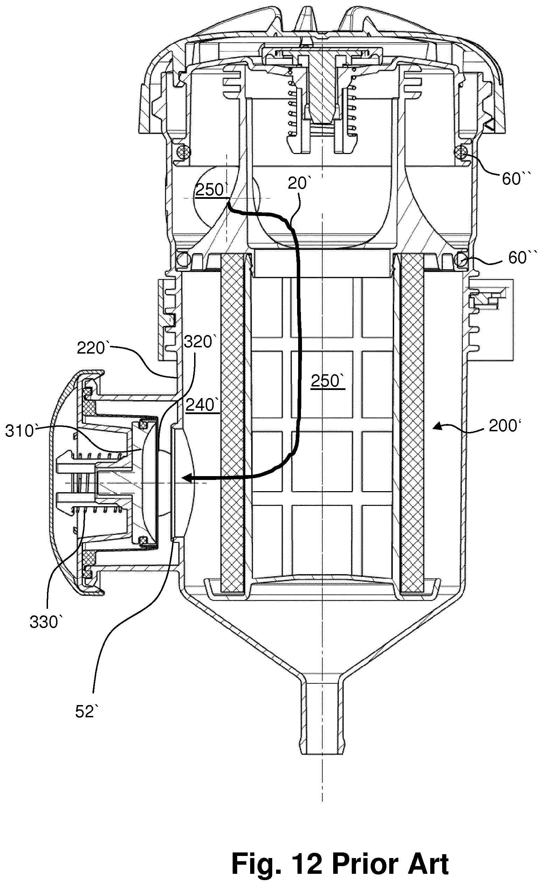

Unabhängig hiervon oder in Verbindung hiermit weist ein besonders vorteilhaftes Ausführungsbeispiel eines Ölabscheiders der vorliegenden Erfindung gegenüber dem beispielsweise in Figur 12 gezeigten Stand der Technik den Vorteil auf, dass sich die Komponenten des Druckregelventils oder die Druckregelung im Gehäuseoberteil befinden.

Eine vorteilhafte Besonderheit der vorliegenden Erfindung ist, dass die Einheit Filterelement insbesondere die Endposition für den Ventilschließkörper darstellen kann.

Eine weitere Besonderheit der vorliegenden Erfindung ist, dass das Filterelement bevorzugt zwei Funktionen übernehmen kann:

1. Abscheiden von Öl aus dem Gas
2. Teilfunktion der Druckregelung.

## Kurze Beschreibung der Zeichnungen

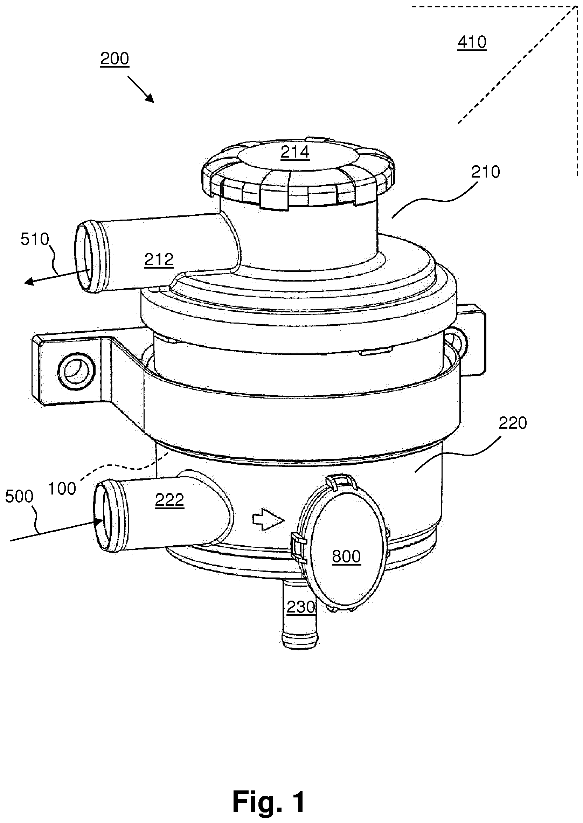

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 5 nachgeordneten Ansprüche verwiesen, andererseits werden weitere Ausgestaltungen, Merkmale und Vorteile der vorliegenden Erfindung nachstehend unter anderem anhand des durch die Figuren 1 bis 10 veranschaulichten Ausführungsbeispiels näher erläutert. Es zeigt:

Fig. 1    in perspektivischer Darstellung ein Ausführungsbeispiel für ein K[urbel]G[ehäuse]E[ntlüftungs]-System gemäß der vorliegenden Erfindung mit Druckregelventil;

Fig. 2    in Längsschnittdarstellung das K[urbel]G[ehäuse]E[ntlüftungs]-System aus Fig. 1 mit einem Ausführungsbeispiel für einen Ölabscheider mit einem Filterelement und einem Dichtelement gemäß der vorliegenden Erfindung;

Fig. 3    in Längsschnittdarstellung eine Detailansicht des Ölabscheiders aus Fig. 2;

Fig. 4    eine Draufsicht auf den Ölabscheider aus Fig. 2;

Fig. 5    in perspektivischer Darstellung den Ventilschließkörper und das Ventilschließkörper-Dichtelement des Druckregelventils des Ölabscheiders aus Fig. 2;

Fig. 6    in Längsschnittdarstellung den Ventilschließkörper und das VentilschließkörperDichtelement aus Fig. 2;

Fig. 7    in perspektivischer Darstellung den Ventilschließkörper, eine Rückstellfeder und einen Druckregelungseinsatz des Ölabscheiders aus Fig. 2;

Fig. 8    in perspektivischer Explosionsdarstellung die Komponenten eines Ausführungsbeispiels für ein Filterelement mit einem Dichtelement gemäß der vorliegenden Erfindung;

Fig. 9    in perspektivischer Explosionsdarstellung die im Gehäusedeckel des in Fig. 1 dargestellten K[urbel]G[ehäuse]E[ntlüftungs]-Systems angeordneten Komponenten;

Fig. 10   in Detailansicht das Druckregelventil des K[urbel]G[ehäuse]E[ntlüftungs]-Systems aus Fig. 1, wobei die den Ventilschließkörper beaufschlagenden Kräfte markiert sind;

Fig. 11   ein Ausführungsbeispiel für eine Regelkennlinie des Kurbelgehäusedrucks in Abhängigkeit vom an der Ausgangsseite des Druckregelventils des K[urbel]G[ehäuse]E[ntlüftungs]-Systems aus Fig. 1 anliegenden Unterdruck;

Fig. 12   ein Ölabscheider nach dem Stand der Technik; und

Fig. 13   eine Seitenansicht des nach dem Stand der Technik ausgebildeten Ölabscheiders aus Fig. 12.

Gleiche oder ähnliche Ausgestaltungen, Elemente oder Merkmale sind in den Figuren 1 bis 12 mit identischen Bezugszeichen versehen.

## Ausführungsform(en) der Erfindung

Figur 1 zeigt in einer perspektivischen Ansicht ein nur schematisch angedeutetes Kurbelgehäuse 410, welches einen Ölabscheider 200 eines K[urbel]G[ehäuse]E[ntlüftungs]-Systems umfasst. Das Kurbelgehäuse 410 ist Bestandteil einer Brennkraftmaschine. Die Brennkraftmaschine kann in einem Kraftfahrzeug verbaut sein. Der Ölabscheider 200 ist als Ölabscheider für ölhaltige Luft aus einem Innenraum des Kurbelgehäuses 410 ausgebildet. Die ölhaltige Luft ist bei derartigen Anwendungen meist versetzt mit Verbrennungsgasen, die aus den Zylindern als Leckagegas in das Kurbelgehäuse austreten. Diese Mischung wird regelmäßig auch als Kurbelgehäusegas bezeichnet, wobei vorliegend zur Vereinfachung der Begriff Luft weiter Verwendung findet.

Der Ölabscheider 200 umfasst ein im Wesentlichen ovalzylindrisches, insbesondere kreiszylindrisches Filtergehäuse, welches sich aus einem ersten Filtergehäuseteil 210, nämlich einem Gehäusedeckel, und einem zweiten Filtergehäuseteil 220, nämlich einem Gehäusekörper, zusammensetzt. Das zweite Filtergehäuseteil 220 weist einen Einlass 222 für die ölhaltige Luft 500 auf. In dem Filtergehäuse ist ein Filterelement 100 angeordnet, welches mindestens ein Filtermedium 10 aus ringförmig, beispielsweise kreisringförmig oder ovalringförmig, angeordnetem Filtermaterial umfasst, siehe Fig. 2. Das Filterelement 100 ist in Fig. 1 durch das Filtergehäuse verdeckt und daher mit einer gestrichelten Bezugszeichenlinie versehen. Innerhalb des Filtergehäuses 210, 220 wird die Luft 500 (ein entsprechender Luftstrom 20 ist in Fig. 2 durch einen Pfeil angedeutet) mittels des Filtermediums 10 gefiltert. Die entstehende Reinluft 510 wird aus einem von dem Filtermedium 10 umschlossenen Innenraum 12 (Figur 2) über ein Reinluftableitelement 50 des Filterelements 100 zu einem Reinluftauslass 212 des Gehäusedeckels 210 und vom Reinluftauslass 212 zurück in den Ansaugtrakt der Brennkraftmaschine geführt. Abgeschiedenes Öl wird über einen Ölauslass 230 abgeführt.

Um den Kurbelgehäuseunterdruck auf einen definierten Wert zu begrenzen, weist der Ölabscheider 200 ein Druckregelventil auf. Das beispielsweise in Figuren 2 und 3 dargestellte Druckregelventil hat einen Ventilschließkörper 310, der von einem Ventilschließkörper-Dichtelement 320, bevorzugt wie hier gezeigt von einer Membran, umgeben ist.

An ihrem vom Ventilschließkörper 310 abgewandten Ende ist die Membran 320 mit dem ersten Filtergehäuseteil 210 verbunden, beispielsweise in das erste Filtergehäuseteil 210 eingeklipst. Alternativ kann die Membran 320 auch zwischen Filtergehäuseteil 210 und Abdeckelement 214 eingespannt sein. Bevorzugt ist die Membran, wie in der vorliegend beschriebenen Ausführungsform, zwischen dem ersten Filtergehäuseteil 210 und einem Einsatz 350, der auch weiter bevorzugt den unteren Anschlag der Feder 330 bildet, verklemmt. Der Einsatz 350 weist Öffnungen auf, so dass der Umgebungsdruck auf die Membran 320 und den Ventilschließkörper 310 wirken kann.

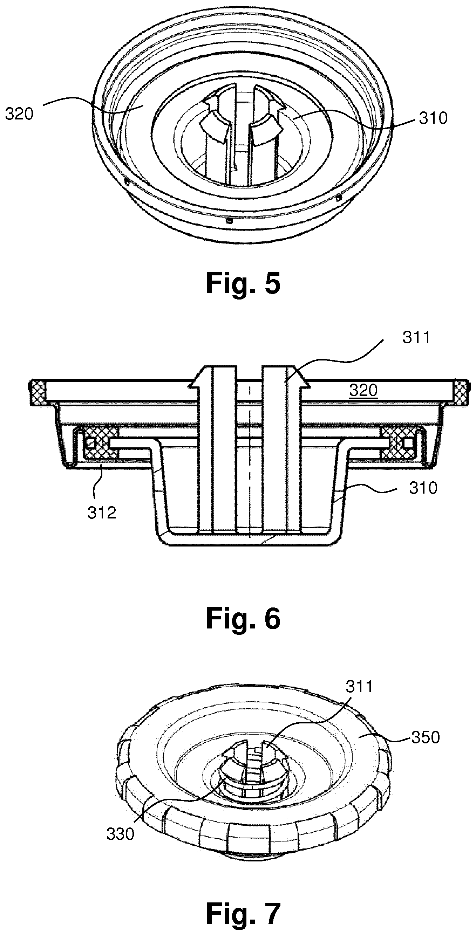

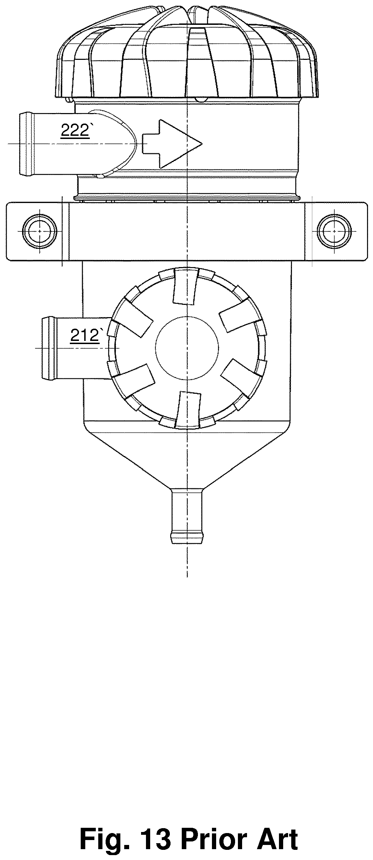

Zum Schließen des Druckregelventils weist dieses einen am Filterelement 100 angeordneten Ventilsitz 52 auf. Im Gegensatz zum in Figuren 12 und 13 gezeigten Stand der Technik weist das in den Figuren 2, 3, 8 und 10 gezeigte Filterelement 100 ein als Endscheibe ausgeführtes Abdeckelement 40 auf, das an seiner vom Filterelement 100 abgewandten Endfläche eine Dichtfläche 52 aufweist, wobei diese Dichtfläche 52 zur Abdichtung des Druckregelventils 52, 310, 320, 330 vorgesehen ist, indem das Ventilschließkörper-Dichtelement 320 oder der Ventilschließkörper 310 bevorzugt mit einer Anlagefläche 312 (siehe Fig. 6) des Ventilschließkörpers 310 oder der Membran 320, insbesondere zum Schließen des Ventils, dichtend zur Anlage an die Dichtfläche 52 kommen kann.

Die Membran 320 ist dazu ausgebildet, den Reinluftauslass 212 und den Innenraum 12 des Filtermediums 10 gegenüber dem Umgebungsluftdruck abzudichten und den Ventilschließkörper axialbeweglich zu halten.

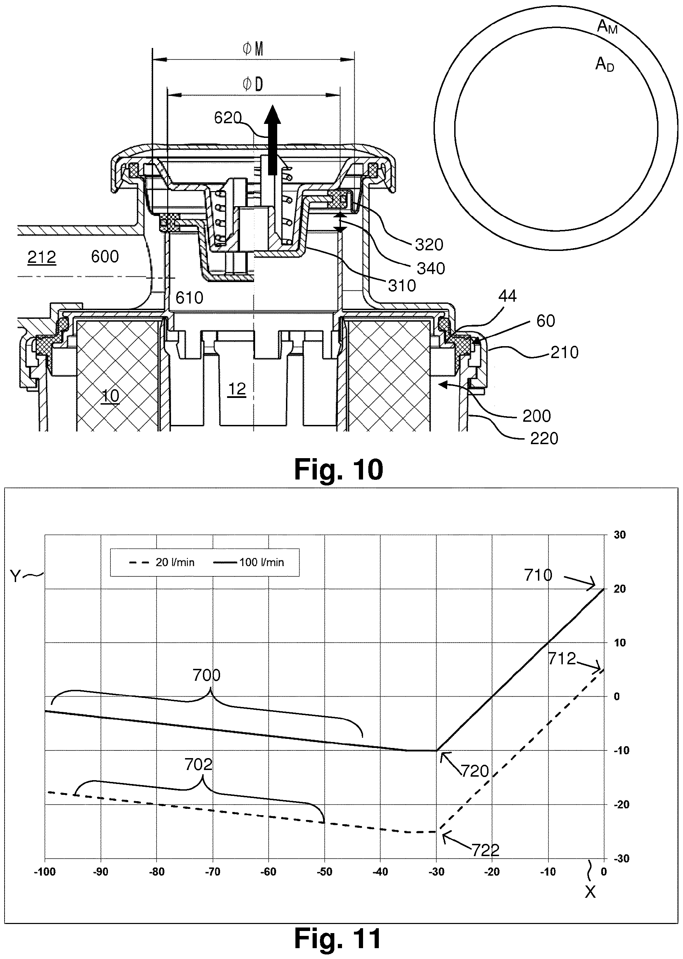

Der Ventilschließkörper 310 ist, wie in Figur 10 gezeigt, relativ zum Ventilsitz 52 bewegbar. Auf der linken Seite der gezeigten Schnittansicht ist der geschlossene Zustand des Ventils gezeigt, dabei liegt der Ventilschließkörper 310 mit einer kreisringförmigen Anlagefläche 312 (siehe Figur 6) bevorzugt wie gezeigt axial an der Dichtfläche 52 an, auf der rechten Seite des Schnittes ist der Ventilschließkörper 310 von der Dichtfläche 52 beabstandet, so dass das Ventil geöffnet ist. Das Druckregelventil 52, 310, 320, 330 ist dazu ausgebildet, die Durchflussmenge oder den Volumenstrom des durch das Reinfluidableitelement 50 abfließenden Fluids mittels der Bewegung des Ventilschließkörpers 310 relativ zum Ventilsitz 52, insbesondere durch die Änderung des Querschnitts des durch den Spalt zwischen Dichtfläche 52 und Ventilschließkörper 310 gebildeten Strömungskanals 340, zu steuern.

Das Druckregelventil ist derart ausgebildet, dass die Membran 320 auf ihrer dem Filterelement 100 bzw. dem Gehäuseinneren zugewandten Seite im Bereich der durch die Durchmesser $\varnothing_M$ und $\varnothing_M$ definierten Kreisringfläche $A_M$ mit dem im Reinluftauslass 212 herrschenden Druck 600 beaufschlagt wird, der Ventilschließkörper 310 auf seiner dem Filterelement 100 bzw. dem Gehäuseinneren zugewandten Seite im Bereich der durch den Innendurchmesser $\varnothing_D$ der Dichtfläche 52 definierten Kreisfläche $A_D$ mit dem im Innenraum 12 des Filtermediums 10 herrschenden Druck 610 beaufschlagt wird. Auf der dem Filterelement 100 bzw. dem Gehäuseinneren abgewandten Seite sind Membran 320 und Ventilschließkörper 310 ferner vom Umgebungsdruck beaufschlagt. Ferner ist bevorzugt eine Rückstellfeder 330 vorgesehen, die die Membran 320 und/oder den Ventilschließkörper 310 mit einer in Öffnungsrichtung wirkenden, d.h. eine vom Filterelement 100 weg gerichtete Kraft, beaufschlagt. Mindestens eine Öffnung in einem Druckregelventil-Abdeckelement 214 und/oder einem Einsatz 350 führt dazu, dass auf der Rückseite der Membran Umgebungsdruck anliegt, diese Entlüftung ermöglicht, dass das Druckregelventil ungedämpft arbeiten kann.

An der vom Filterelement 100 abgewandten Seite des Ventilschließkörpers 310 ist, wie bereits beschrieben, bevorzugt eine Rückstellfeder 330 angeordnet. Die Rückstellfeder 330 beaufschlagt den Ventilschließkörper 310 und/oder die daran angeordnete Membran 320 mit einer vom Ventilsitz 52 weg gerichteten Kraft 620 (vgl. Figur 10). Die Druckfeder oder Rückstellfeder 330 dient dazu, die Ruheposition des Ventilschließkörpers 310 sicherzustellen. Die Ruheposition entspricht der Position des Ventilschließkörpers 310, bei der die Kraft der Rückstellfeder 330 genau so groß ist, wie die Summe der Kraft des Kurbelgehäusedrucks 610 und der Kraft des Absaugdrucks 600.

Auf dem Weg vom Innenraum 12 des Filtermediums 10 zum Reinluftauslass 212 durchfließt das Reinfluid einen zwischen dem Ventilschließkörper 310, insbesondere der am Ventilschließkörper 310 angeordneten Membran 320, und dem Ventilsitz 52 angeordneten Strömungskanal 340 (vgl. Figuren 3 und 10), der bevorzugt wie vorliegend die Form eines Ringspalts aufweist. Durch die relative Bewegung des Ventilschließkörpers 310 zum Ventilsitz 52 ist der Durchmesser dieses Strömungskanals 340 veränderbar oder regulierbar.

Mit abnehmendem Druck im Reinluftauslass 212 bzw. auf der Ausgangsseite des Druckregelventils macht die Membran 320 eine Hubbewegung in Richtung Ventildom oder Ventilsitz 52 und reduziert dadurch den Querschnitt des Strömungskanals 340. Dadurch erhöht sich der Strömungswiderstand des Druckregelventils über den Ventilsitz 52.

Über die Durchmesserquerschnittsverhältnisse $\varnothing_M$, $\varnothing_D$ von Membran 320 und dem Innendurchmesser der Dichtfläche 52 bzw. der vom Filterelement 100 abgewandten Endfläche des Reinfluidableitelements 50 kann das Regelverhalten des Druckregelventils eingestellt werden. Der Querschnittsdurchmesser $\varnothing_M$ der Membran 320 (im vorliegenden Ausführungsbeispiel definiert durch den Rollpunkt der Membran 320) und der Querschnittsinnendurchmesser $\varnothing_D$ der Dichtfläche 52 ist in Figur 10 gezeigt.

Der Ventilschließkörper 310 ist in Ruheposition (Schließposition), wenn

a) die Kraft F der Rückstellfeder 330
b) minus dem Differenzdruck Δp aus dem atmosphärischen Druck und dem Kurbelgehäusedruck 610, multipliziert mit der Querschnittsfläche $A_D$ (definiert durch den Innendurchmesser $\varnothing_D$ des Ventilsitzes 52)
c) minus dem Differenzdruck Δp aus dem atmosphärischen Druck und dem Absaugdruck 600, multipliziert mit der Querschnittsfläche $A_M$ (definiert durch den Ring zwischen Querschnittsdurchmesser $\varnothing_M$ der Membran 320 und Innendurchmesser $\varnothing_D$ des Ventilsitzes 52) Null ergibt.

In Kurzform gilt also

$$0 = F_{\text{Rückstellfeder 330}} - F_{(\text{Kurbelgehäusedruck 610})} - F_{(\text{Absaugdruck 600})}$$

$$= F_{\text{Rückstellfeder 330}} - \Delta p_{(\text{atmosphärischer Druck} - \text{Kurbelgehäusedruck})} * A_D - \Delta p_{(\text{atmosphärischer Druck} - \text{Absaugdruck})} * A_M$$

Die Rückstellfeder 330 verhindert, dass schon bei kleinen Absaugunterdrücken 600 vom Turbolader oder Ansaugtrakt des Motors die Membran 320 permanent verschlossen ist. Des Weiteren kann mittels der Rückstellfeder 330 die Lage der Druckregelcharakteristik variiert werden. Dies bedeutet, dass bei einer härteren Rückstellfeder 330 der Absaugunterdruck 600 stärker auf das Kurbelgehäuse wirken kann und sich die Kurve nach unten verlagert.

Figur 11 zeigt eine beispielhafte Regelkennlinie eines Druckregelventils. Auf der Y-Achse ist der im Einlass für Rohfluid 222 bzw. auf der Rohseite 250 herrschende Druck, insbesondere der Kurbelgehäusedruck, in Hektopascal [hPa] dargestellt. Auf der X-Achse ist der im Reinluftauslass 212 herrschende Druck, insbesondere der Saugunterdruck, in Hektopascal [hPa] dargestellt. Die erste Regelkennlinie, welche in Figur 11 mit einer durchgezogenen Linie dargestellt ist, zeigt Druckverhältnisse bei einem Volumenstrom im Druckregelventil von 100 Litern pro Minute. Die zweite Regelkennlinie, die in Figur 11 mit einer gestrichelten Linie dargestellt ist, zeigt Druckverhältnisse bei einem Volumenstrom im Druckregelventil von 20 Litern pro Minute. Der Regelbereich der beispielhaft gezeigten beiden Regelkennlinien liegt im Bereich -2 hPa bis -28 hPa. Die Steigung der mit Bezugszeichen 700, 702 markierten Bereiche der beiden Regelkennlinien ist abhängig von den Flächenverhältnissen $A_D$ und $A_M$ des Ventilsitzes 52 und der Membran 320. Der mit dem Bezugszeichen 710 bzw. 712 markierte Schnittpunkt der beiden Regelkennlinien mit der Y-Achse zeigt den Druckverlust bei geöffnetem Druckregelventil.

Wie in Figur 11 dargestellt, beeinflusst der Druckverlust des Ölabscheiders 200 auch die Lage der Druckregelkurve, wobei mit zunehmendem Druckverlust bzw. Volumenstrom auch die Lage der Druckregelkurve steigt. Umgekehrt sinkt bei geringerem Volumenstrom der Kurbelgehäusedruck.

Das Verhältnis der Querschnittsdurchmesser $\varnothing_M$ und $\varnothing_D$ von Membran 320 und Dichtfläche 52 beeinflusst die Steigung 700, 702 der Druckregelkurve. Herrscht im Kurbelgehäuse gegenüber der Atmosphäre ein Unterdruck und wird dabei die Vorspannung der Rückstellfeder 330 überwunden, so bewegt sich die Membran 320 auf die Dichtfläche 52 zu und der Strömungswiderstand steigt.

Erst wenn der Saugunterdruck 600 groß genug ist und die Rückstellfeder 330 zusammengedrückt wird, kommt es zu einem gekrümmten Kurvenverlauf und schließlich zu einem Minimum des Kurbelgehäusedrucks.

Bei noch höheren Saugunterdrücken ist ein leichter Anstieg des Drucks 610 im Innenraum 12 des Filtermediums, insbesondere des Kurbelgehäusedrucks, zu beobachten. In diesen Betriebsbereichen verschließt die Membran 320 intervallweise die Saugseite des Ventils und drosselt bzw. unterbricht somit den Volumenstrom. Dieser mittlere Druck ist höher als der Minimaldruck, da bei verschlossenem Ventilsitz 52 und stärkerem Saugunterdruck 600 der Druck 610 im Kurbelgehäuse entsprechend höher sein muss, um die Membran 320 gegen den auf der Außenseite des Ventilsitzes 52 wirkenden Saugunterdruck wieder von diesem abzuheben.

Der Ölabscheider 200 kann aus Sicherheitsgründen ein Überdruckventil 800 (Figur 1) aufweisen. Dieses Überdruckventil kann beispielsweise wie in DE 10 2013 005 624 A1 beschrieben ausgebildet sein.

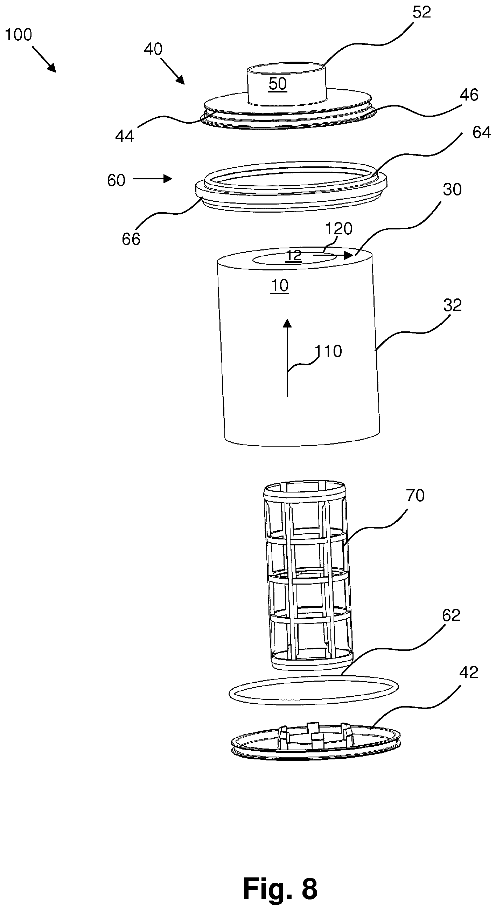

Figur 8 zeigt die Komponenten eines Ausführungsbeispiels eines Filterelements 100 nach der vorliegenden Erfindung. Dieses Filterelement 100 ist für das in Figur 1 gezeigte K[urbel]G[ehäuse]E[ntlüftungs]-System ausgebildet. Das Filterelement 100 hat ein Abdeckelement, insbesondere eine Endscheibe 40. Diese Endscheibe 40 deckt die dem Reinfluidauslass 212 zugewandte Deckfläche 30 (vgl. Figur 3) des Filtermediums 10 ab und ist mit diesem dichtend verbunden, damit das Fluid das Filtermedium 10 bis in den Innenraum 12 des Filtermediums 10 durchströmt. Das Filterelement 100 ist als ringförmiges Koaleszenzelement ausgebildet. Hierzu weist das Filterelement 100 wie bevorzugt ein als Vlies ausgebildetes Filtermedium 10 auf, das mehrfach und damit mehrlagig ringförmig um das Mittelrohr 70 (auch Stützrohr genannt) herum gewickelt ist. Das Mittelrohr 70 ist durchströmbar und weist daher Öffnungen auf. Dies kann beispielsweise durch eine gitterförmige Ausführung wie in Fig. 8 gezeigt, mittels eines Lochblechs oder ähnlicher Ausführungen realisiert werden. Das Filtermedium 10 ist als ein Vlieswickel ausgebildet. Zur Stabilisierung und Abdichtung ist dieser wie bevorzugt stirnseitig jeweils mit einem als Endscheibe ausgeführten Abdeckelement 40, 42 dichtend verbunden, beispielsweise mittels Kleben oder Schweißen. Der Aufbau des Koaleszenzelementes mit dem gewickelten Vlies unterscheidet sich damit grundsätzlich von anderen Filterelementen, die zur Separation von Festpartikeln aus Fluiden wie Luft oder Öl bestimmt sind und im Regelfall ein gefaltetes Filtermedium aufweisen.

Die Dichtfläche 52 am Reinfluidableitelement 50 ist beabstandet von der axialen, äußeren Oberfläche des Abdeckelements 40. Damit wird der für den Reinfluidauslass 212 benötigte axiale Bauraum überbrückt. Die Länge des Reinfluidableitelements 50 gemessen von der axialen, äußeren Oberfläche des Abdeckelementes 40 entspricht dem Durchmesser des Reinfluidauslasses 212 des oberen Gehäuseteils 210. Damit kann eine strömungsgünstige Gesamtauslegung erreicht werden, bei welcher die Positionierung der Dichtfläche 52 am Abdeckelement 40 bzw. am Filterelement 100 keine Nachteile mit sich bringt.

Das Abdeckelement 40 ist in der in den Figuren 2, 3 und 8 im Detail gezeigten Ausführungsform wie bevorzugt als eine Endscheibe des Filterelements 100 ausgebildet. Diese ist mit dem Filtermedium an einer Stirnseite des Filterelements dichtend und unlösbar verbunden, beispielsweise durch Kleben oder Schweißen. Das Abdeckelement 40 ist bevorzugt aus thermoplastischem Kunststoff, bevorzugt durch Spritzgießen hergestellt.

Das Reinfluidableitelement 50 ist in der in den Figuren 2, 3 und 8 im Detail gezeigten Ausführungsform mit dem Abdeckelement 40 wie bevorzugt einstückig dichtend verbunden ausgebildet.

Das Reinfluidableitelement 50 ist, wie ebenfalls in den Figuren gezeigt bevorzugt, ein kreiszylindrisches, gerades Rohr. Dieses Rohr weist eine geschlossene zylindrische Wandung und zwei offene Enden auf, wobei an einem, von dem Abdeckelement abgewandten Ende die Dichtfläche 52 ausgebildet ist und das andere Ende mit dem Abdeckelement 40 verbunden ist, so dass eine fluidische Verbindung zum Innenraum 12 des Filtermediums 10 bzw. des Filterkörpers gebildet ist. Die Enden sind bevorzugt senkrecht zur Mittelachse orientiert.

In der in den Figuren 2, 3 und 8 im Detail gezeigten Ausführungsform ist wie bevorzugt das Abdeckelement 40 als ringförmige Endscheibe ausgebildet, von welcher sich das als Rohr ausgebildete Reinfluidableitelement 50 auf der dem Filtermedium 10 abgewandten Seite einstückig mit dem Abdeckelement ausgebildet weg erstreckt. Reinfluidelement und Abdeckelement bilden bevorzugt wie gezeigt einen im Wesentlichen L-förmigen oder alternativ T-förmigen Querschnitt.

Das K[urbel]G[ehäuse]E[ntlüftungs]-System besitzt zwei Räume, die voneinander getrennt werden müssen, nämlich den Rohraum oder die Rohseite 250, auf der sich das ungereinigte Blow-By-Gas befindet, und den Reinraum oder die Reinseite 240, auf der sich das gereinigte Gas befindet. Zudem müssen Rohraum 250 und Reinraum 240 zusätzlich zur Atmosphäre abgetrennt werden. Um diese Aufgabe nur mit einer Dichtung zu lösen, weist das z.B. in Figur 8 gezeigte Filterelement 100 ein als Kombidichtung ausgebildetes Dichtelement, nämlich eine Filterelementdichtung 60, auf, die es ermöglicht, alle drei Bereiche gegenseitig abzutrennen.

Die Filterelementdichtung 60 (vgl. Figuren 2, 3 und 8) dient also zur Abdichtung

- der Rohseite 250 des Filterelements 100 von der Reinseite 240 des Filterelements 100,
- des Innenraums des Gehäuseoberteils 210 zum Umgebungsluftdruck sowie
- des Innenraums des Gehäuseunterteils 220 zum Umgebungsluftdruck.

Ein besonderer Vorteil der in Figuren 2, 3 und 8 gezeigten Filterelementdichtung 60 gegenüber Filterelementdichtungen aus dem Stand der Technik ist die funktionale Entkopplung zweier Dichtungsfunktionen, nämlich einerseits des Abdichtens des Innenraums des Filtergehäuses 210, 220 von der Umgebung und andererseits des Abdichtens der Rohseite 250 von der Reinseite 240. Die beiden in den Figuren 2 und 8 gezeigten Dichtbereiche, nämlich der radial dichtende Bereich 64 und der axial dichtende Bereich 66, sind in ihrer Funktion unabhängig und doch in einem Teil, nämlich dem Dichtelement 60, integriert.

Die in Figuren 2, 3 und 8 gezeigte Filterelementdichtung 60 weist also einen mittels einer definierten Kraft radial verpressten Bereich 64 und einen mittels einer definierten Kraft axial verpressten Bereich 66 auf, wobei der radial verpresste Bereich 64 und der axial verpresste Bereich 66 miteinander verbunden sind und ein zusammenhängendes Dichtelement bilden, das zwei unabhängige Dichtungsfunktionen erfüllt. Die Dichtkräfte werden vom Fachmann durch Auslegung der Dichtungsparameter E-Modul, Dichtungsabmessung und Dichtspaltabmessung definiert.

Eine definierte radiale Abdichtung kann dadurch bereitgestellt werden, dass bei dem in den Figuren 2, 3 und 8 gezeigten Ölabscheider 200 die Filterelementdichtung 60 mittels einer definierten Kraft radial zwischen dem Gehäuseoberteil 210 und der Endscheibe 40 verpresst ist. Dies wird vorteilhafterweise dadurch erreicht, dass sich das Gehäuseoberteil 210 bis zur Höhe der Endscheibe 40 erstreckt, die Endscheibe 40 also über der Gehäusekante des Gehäuseoberteils 210 angeordnet ist.

Der radial dichtende Bereich 64 kann nach Art eines O-Rings ausgebildet sein (vgl. Figuren 2 und 3). Der axial dichtende Bereich 66 ist insbesondere in Form eines Wulstes mit im Wesentlichen rechteckigem Querschnitt ausgebildet und weist weiter bevorzugt zwei gegenüberliegende Dichtflächen auf, welche in dichtendem Kontakt mit Gehäuseoberteil 210 und unterem Gehäuseteil 220 stehen und zwischen den Gehäuseteilen axial verpresst werden. In diesem Fall setzt sich die Filterelementdichtung 60 aus einem O-Ring und einer axialen Dichtung zusammen, die im Verbund hergestellt werden.

Die Beabstandung der dichtenden Bereiche 64, 66 wird vorteilhaft mittels eines Verbindungsstegs erreicht, der die beiden dichtenden Bereiche verbindet. Der Verbindungssteg weist bevorzugt einen L-förmigen Querschnitt auf, wie in den Figuren 2, 3 und 8 zu erkennen. Dies bedeutet, dass von einem ersten Schenkel und Verbindungsstegabschnitt, der eine hohlzylindrische Form bildet und mit dem radial dichtenden Bereich 64 verbunden ist, ein weiterer Schenkel nach radial innen oder außen ragt, der somit einen kreisringscheibenförmigen, zweiten Verbindungsstegabschnitt bildet und mit dem axial dichtenden Bereich 66 verbunden ist. Dies ermöglicht, dass ein Gehäuseoberteil 210 in einem engen Bauraumbereich unabhängige, zu den dichtenden Bereichen korrespondierende Dichtflächen bereitstellen kann, beispielsweise indem das Gehäuseoberteil bzw. der Gehäusedeckel einen im Bereich des Dichtelements 60 ebenfalls abschnittsweise L-förmigen Querschnitt aufweist, wobei der axiale Schenkel eine Anlagefläche für den radial dichtenden Bereich und der radiale Schenkel eine Anlagefläche für den axial dichtenden Bereich des Dichtelements bereitstellt.

Im Innenraum 12 des Filtermediums 10 kann ein als Stützelement für das Filtermedium 10 ausgebildetes Mittelrohr 70 angeordnet sein. Das Mittelrohr stützt das Filtermedium 10 und schützt dieses vor einem Kollabieren.

Um sicherzustellen, dass das Fluid das Filtermedium 10 bis in den Innenraum 12 des Filtermediums 10 durchströmt, weist das Filterelement 100 an seinem dem Ölauslass 230 zugewandten Ende ein weiteres Abdeckelement 42, insbesondere eine weitere Endscheibe 42, auf.

Zum Abdichten der Reinseite des Filterelements von der Rohseite des Filterelements kann dem weiteren Abdeckelement 42, welches ebenfalls bevorzugt als Endscheibe, insbesondere als offene Endscheibe mit zentraler Öffnung für den Ölablass eine, beispielsweise als O-Ring ausgebildete, weitere Filterelementdichtung 62 zur Abdichtung des weiteren Abdeckelements 42 gegenüber dem Gehäuseteil 220 zugeordnet sein. Diese weitere Filterelementdichtung 62 ist bevorzugt radial außen an dem weiteren Abdeckelement 42 angeordnet.

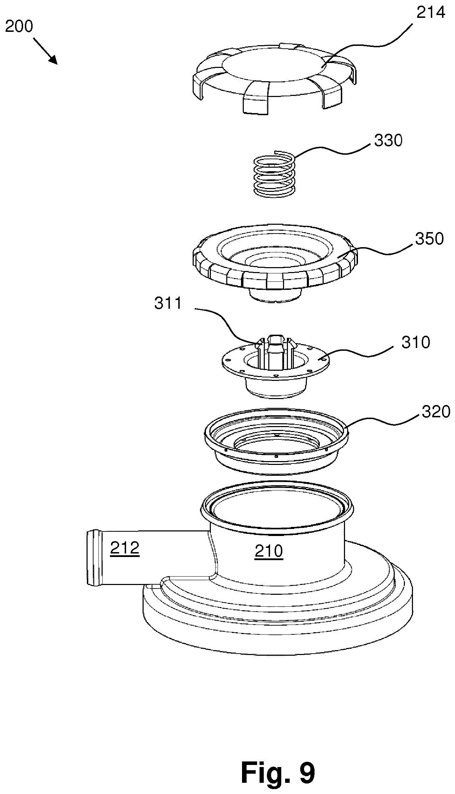

Figur 9 zeigt in Explosionsdarstellung die im oberen Gehäuseteil 210 angeordneten Komponenten der Druckregelung. Die Dichtfläche 52 ist auch eine Komponente der Druckregelung. Da die Dichtfläche 52 am Filterelement 100 angeordnet ist, ist diese in Figur 8 dargestellt.

Ventilschließkörper 310 und Membran 320 führen bei der Druckregelung eine vertikale Hubbewegung durch (vgl. Figur 9). Bei dieser vertikalen Hubbewegung werden Ventilschließkörper 310 und Membran 320 zum Filterelement 100 hin und vom Filterelement weg bewegt.

Zu den in Figur 9 gezeigten Komponenten der Druckregelung gehören:

- das zum Abdecken des ersten Gehäuseteils 210 ausgebildete Druckregelelement-Abdeckelement 214 mit einer Öffnung zur Erdatmosphäre,
- der Ventilschließkörper 310,
- die Membran 320,
- vorzugsweise mindestens ein zwischen Membran 320 und Ventilschließkörper 310 angeordneter zur Druckregelung ausgebildeter Einsatz 350,
- die Rückstellfeder 330 und
- das erste Gehäuseteil 210.

Die Rückstellfeder 330 ist auf der dem Ventilsitz 52 abgewandten Seite des Ventilschließkörpers 310 angeordnet und stützt sich unten auf dem Einsatz 350 ab, der bevorzugt ebenfalls eine Öffnung aufweist. Die Rückstellfeder 330 befindet sich somit auf der Atmosphärenseite. Der Ventilschließkörper 310 weist bevorzugt mindestens einen und besonders bevorzugt, wie vorliegend gezeigt, drei oder vier Fortsätze 311 auf, die durch mindestens eine Öffnung des Einsatzes 350 hindurchragen. Die Rückstellfeder kann somit bevorzugt zwischen Einsatz 350 und dem Fortsatz bzw. den Fortsätzen 311, insbesondere den Haken am Ende der Fortsätze, axial eingespannt werden. Auf diese Weise kann die Rückstellfeder 330 auf den Ventilschließkörper eine öffnende, insbesondere weg von der Dichtfläche 52 gerichtete, Kraft ausüben.

Figuren 12 und 13 zeigen ein Ausführungsbeispiel eines Ölabscheiders 200' eines K[urbel]G[ehäuse]E[ntlüftungs]-Systems nach dem Stand der Technik. Die Druckregelung dieses Ölabscheiders 200' befindet sich an der Seite des zweiten Gehäuseteils 220'. Der Ventilschließkörper 310' weist eine Tellerform auf. Der Ventilsitz 52' ist hier an die Gehäuse-Außenseite angespritzt. Die Abdichtung zwischen Ventilsitz 52' und Ventilschließkörper 310' geschieht hart auf hart, insbesondere durch gleiche Werkstoffe der beiden Komponenten. Diese Kombination gleicher Werkstoffe von Ventilsitz 52' und mit dem Ventilsitz 52' in Kontakt bringbaren Bereich des Ventilschließkörpers 310' beeinflusst das Abdichtverhalten negativ.

Nach einer vorteilhaften Ausführungsform ist vorgesehen, dass sich die Rückstellfeder 330 bei dem in den Figuren 1 bis 11 gezeigten Ausführungsbeispiel der vorliegenden Erfindung auf der Atmosphärenseite befindet. Bevorzugt befindet sich die Rückstellfeder dabei geschützt in einem durch Membran 320 und Ventilschließkörper 310 auf der einen Seite und Druckregelventil-Abdeckelement 214 auf der anderen Seite gebildeten Raum. Durch die Anordnung außerhalb des Fluidstroms ist die Feder vor einer Beeinflussung durch im Fluidstrom enthaltene, sich auf der Feder ablagernde Verunreinigungen geschützt.

Im Gegensatz zu dem in den Figuren 2 und 3 gezeigten Filtermedium 100 durchströmt das Fluid das in Figur 12 gezeigte Filtermedium nach dem Stand der Technik von innen nach außen. Die Strömungsrichtung des Fluids ist mittels eines Pfeils markiert.

Anstelle einer Kombidichtung weist das in Figur 12 gezeigte K[urbel]G[ehäuse]E[ntlüftungs]-System zum Abdichten der Reinseite 240 des Filterelements 100 von der Umgebung und zum Abdichten der Rohseite 250 des Filterelements 100 von der Reinseite 240 des Filterelements 100 zwei getrennte O-Ringe 60" auf.

**Bezugszeichenliste**

| | |
|---|---|
| 10 | Filtermedium, insbesondere Vlieswickel |
| 12 | vom Filtermedium 10 umschlossener Innenraum oder Hohlraum |
| 20 | Strömungsrichtung des zu filternden Fluids, insbesondere Strömungsrichtung des das Filtermedium 10 durchströmenden Rohfluids 500, bei der vorliegenden Erfindung vgl. Figuren 2 und 3 |
| 30 | Deckfläche des Filtermediums 10 |
| 32 | Mantelfläche des Filtermediums 10 |
| 40 | Abdeckelement des Filtermediums 10, insbesondere dem Reinfluidauslass 212 zugewandte Endscheibe des Filtermediums 10 |
| 42 | weiteres Abdeckelement des Filtermediums 10, insbesondere dem Ölauslass 230 zugewandte Endscheibe des Filterelements 100 |
| 44 | zum Befestigen des Dichtelements 60 ausgebildete Befestigungskontur der Endscheibe 40 |
| 46 | Stützkontur der Endscheibe 40 vgl. Figur 8 |
| 50 | Reinfluidableitelement, insbesondere zum Abführen des Reinfluids ausgebildeter Dom oder Stutzen, beispielsweise rohrförmig ausgebildetes Reinfluidableitelement |
| 52 | Dichtfläche, insbesondere Ventilsitz, des Filterelements 100 der vorliegenden Erfindung |
| 52' | Ventilsitz beim Stand der Technik (Figuren 12, 13) |
| 60 | Dichtelement nach der vorliegenden Erfindung, vgl. Figuren 2, 3 und 8, insbesondere Filterelementdichtung, beispielsweise zur Abdichtung der Rohseite des Filterelements 100 von der Reinseite des Filterelements 100 sowie zur Abdichtung des Innenraums des Filtergehäuses zur Umgebung, |
| 60" | zweites Ausführungsbeispiel für ein Dichtelement, insbesondere für eine Filterelementdichtung, nach dem Stand der Technik vgl. Figur 12 |
| 62 | weitere Filterelementdichtung, insbesondere O-Ring |
| 64 | radial dichtender Bereich des Dichtelements 60, insbesondere innerhalb des Filtergehäuses verpresster Bereich des Dichtelements 60 |
| 66 | axial dichtender Bereich des Dichtelements 60, insbesondere zwischen dem ersten Gehäuseteil 210 und dem weiteren Gehäuseteil 220 verpresster Bereich des Dichtelements 60 |
| 70 | Stützelement, insbesondere Mittelrohr, des Filterelements 100 |
| 100 | Filterelement, insbesondere Ringfilterelement, beispielsweise auswechselbares Filterelement oder Wechselelement |
| 110 | Längsachse des Ringfilterelements 100 bzw. des Gehäusekörpers 220, vgl. Fig. 8 |
| 120 | Radius des Ringfilterelements 100 bzw. des Gehäusekörpers 220, vgl. Fig. 8 |
| 130 | Rotationsachse, vgl. Figur 2 |
| 200 | Ölabscheider des Kurbelgehäuseentlüftungssystems der vorliegenden Erfindung (Figuren 1 bis 4, 9 und 10) |
| 200' | Ölabscheider des Standes der Technik (Fig. 12, 13) |
| 210 | erstes oder oberes Gehäuseteil des Ölabscheiders 200, insbesondere Gehäusedeckel des Filtergehäuses des Ölabscheiders 200 |
| 212 | Reinfluidauslass des Ölabscheiders 200 der vorliegenden Erfindung, insbesondere Reinfluidauslass des ersten oder oberen Gehäuseteils 210 |
| 212' | Reinfluidauslass des Ölabscheiders des Standes der Technik (Fig. 12, 13) |
| 214 | Druckregelventil-Abdeckelement |
| 220 | weiteres oder zweites oder unteres Gehäuseteil des Ölabscheiders 200 der vorliegenden Erfindung (Fig. 1 bis 3 und 10), insbesondere Gehäusekörper des Filtergehäuses des Ölabscheiders 200 |
| 220' | unteres Gehäuseteil des Ölabscheiders 200' aus dem Stand der Technik (Fig. 12, 13) |
| 222 | Einlass für Rohfluid, insbesondere für ölhaltiges Gas, beispielsweise für ölhaltige Luft, des Ölabscheiders 200 |

der vorliegenden Erfindung (Fig. 1, 2 und 4)

| | |
|---|---|
| 222' | Einlass für Rohfluid, insbesondere für ölhaltiges Gas, beispielsweise für ölhaltige Luft, des Ölabscheiders des Standes der Technik (Fig. 12, 13) |
| 230 | Ölauslass |
| 240 | Reinraum oder Reinseite des Filterelements 100 der vorliegenden Erfindung |
| 240' | Reinraum oder Reinseite des Filterelements nach dem Stand der Technik, vgl. Fig. 12 |
| 250 | Rohraum oder Rohseite des Filterelements 100 der vorliegenden Erfindung |
| 250' | Rohraum oder Rohseite des Filterelements nach dem Stand der Technik, vgl. Fig. 12 |
| 310 | Ventilschließkörper, insbesondere Regelzapfen, des Ölabscheiders 200 der vorliegenden Erfindung |
| 310' | Ventilschließkörper, insbesondere Regelzapfen, des Standes der Technik (Fig. 12, 13) |
| 311 | Fortsätze, insbesondere vom Ventilschließkörper nach oben ragende, hakenartige Fortsätze, an welchen die Rückstellfeder 330 angreifen kann, wobei die Fortsätze bevorzugt einstückig mit dem Ventilschließkörper ausgebildet sind |
| 312 | Anlagefläche des Ventilschließkörpers zur Anlage an der Dichtfläche 52 des Filterelements 100 insbesondere zum Schließen des Ventils |
| 320 | Ventilschließkörper-Dichtelement, insbesondere den Ventilschließkörper 320 umgebende Membran, beispielsweise sich zwischen Ventilschließkörper 310 und erstem Gehäuseteil 210 erstreckende Membran |
| 320' | Ventilschließkörper-Dichtelement des Standes der Technik (Fig. 12, 13) |
| 330 | Rückstellfeder des Ölabscheiders 200 der vorliegenden Erfindung |
| 330' | Rückstellfeder des Standes der Technik (Fig. 12, 13) |
| 340 | zwischen Ventilschließkörper 310, insbesondere dem Ventilschließkörper-Dichtelement 320, und Dichtfläche 52 angeordneter Strömungskanal |
| 350 | zur Druckregelung ausgebildeter Einsatz |
| 410 | Gehäuse des Kurbelgehäuseentlüftungssystems |
| 500 | Rohfluid, insbesondere ölhaltiges Gas, beispielsweise ölhaltige Luft |
| 510 | Reinfluid, insbesondere Reingas, beispielsweise Reinluft |
| 600 | durch den im Reinluftauslass 212 herrschenden Druck, insbesondere Absaugdruck, beispielsweise Saugunterdruck, ausgeübte Kraft |
| 610 | durch den im Innenraum 12 des Filtermediums 10 herrschenden Druck, insbesondere den Kurbelgehäusedruck, ausgeübte Kraft |
| 620 | durch die Rückstellfeder 330 ausgeübte Kraft |
| 700 | Bereich der ersten Regelkennlinie, dessen Steigung abhängig ist von den Abmessungen, insbesondere von den Flächenverhältnissen $A_M/A_D$ |
| 702 | Bereich der zweiten Regelkennlinie, dessen Steigung abhängig ist von den Abmessungen, insbesondere von den Flächenverhältnissen $A_M/A_D$ |
| 710 | Schnittpunkt der ersten Regelkennlinie mit der Y-Achse, welcher den Druckverlust bei geöffnetem Druckregelventil anzeigt |
| 712 | Schnittpunkt der zweiten Regelkennlinie mit der Y-Achse, welcher den Druckverlust bei geöffnetem Druckregelventil anzeigt |
| 720 | Wendepunkt der ersten Regelkennlinie in Abhängigkeit der Druckfeder oder der Federrate der Rückstellfeder 330 |
| 722 | Wendepunkt der zweiten Regelkennlinie in Abhängigkeit der Druckfeder der Rückstellfeder 330 oder der Federrate der Rückstellfeder 330 |
| 800 | Überdruckventil |
| $A_M$ | Querschnittsfläche der Membran 320 |
| $A_D$ | Querschnittsfläche des Innendurchmessers $\varnothing_D$ der Dichtfläche 52 oder Querschnittsfläche des Innendurchmessers der vom Filterelement 100 abgewandten Endfläche des Reinfluidableitelements 50 |
| $\varnothing_M$ | Querschnittsdurchmesser der Membran 320 |
| $\varnothing_D$ | Querschnittsinnendurchmesser der Dichtfläche 52 oder Innendurchmesser der vom Filterelement 100 abgewandten Endfläche des Reinfluidableitelements 50 |

## Patentansprüche

1. Ölabscheider (200) eines K[urbel]G[ehäuse]E[ntlüftungs]-Systems, aufweisend ein Ringfilterelement (100), das zum Abscheiden von Öl aus Fluid ausgebildet ist, ein am Ringfilterelement (100) lösbar oder unlösbar befestigtes Dichtelement (60) und ein zum Aufnehmen des Ringfilterelements (100) ausgebildetes Filtergehäuse (210, 220) mit zwei Teilen, wobei der Innenraum des Filtergehäuses (210, 220) durch das Ringfilterelement (100) in einen Rohraum oder eine Rohseite (250) und in einen Reinraum oder eine Reinseite (240) unterteilt ist, wobei das Dichtelement (60) einteilig ausgebildet ist und

mindestens einen radial dichtenden Bereich (64) aufweist, der dazu ausgebildet ist, in Richtung des Radius (120) des Ringfilterelements (100) zu wirken und mindestens einen axial dichtenden Bereich (66) aufweist, der dazu ausgebildet ist, in Richtung der Längsachse (110) des Ringfilterelements (100) zu wirken,

**dadurch gekennzeichnet, dass**

der radial dichtende Bereich (64) innerhalb des Filtergehäuses angeordnet und dazu ausgebildet ist, die Rohseite (250) gegenüber der Reinseite (240) abzudichten und

der axial dichtende Bereich (66) zwischen zwei Teilen des Filtergehäuses angeordnet und dazu ausgebildet ist, den Innenraum des Filtergehäuses (210, 220) gegenüber der Umgebung abzudichten; wobei

- der radial dichtende Bereich (64) mit axialem und radialem Abstand zum axial dichtenden Bereich (66) angeordnet ist; wobei
- der radial dichtende Bereich (64) und der axial dichtende Bereich (66) in Richtung der Längsachse (110) des Ringfilterelements (100) versetzt zueinander angeordnet sind, wobei der radial dichtende Bereich (64) der Strömungsrichtung des zu filternden Fluids folgend oberhalb des axial dichtenden Bereichs (66) angeordnet ist.

2. Ölabscheider nach Anspruch 1, **dadurch gekennzeichnet, dass**

- das Ölabscheideelement (200) ein zum Aufnehmen des Ringfilterelements (100) ausgebildetes Filtergehäuse (210, 220) aufweist,
- das Filtergehäuse (210, 220) ein erstes oder oberes Gehäuseteil (210) mit einem zum Abführen des gefilterten Reinfluids ausgebildeten Reinfluidauslass (212) aufweist und
- der radial dichtende Bereich (64) des Dichtelements (60) auf gleicher Höhe mit dem Reinfluidauslass (212) angeordnet ist.

3. Ölabscheider nach einem der Ansprüche 1 bis 2, **dadurch gekennzeichnet, dass**

- das Filtergehäuse (210, 220) ein erstes oder oberes Gehäuseteil (210) mit einem zum Abführen des gefilterten Reinfluids ausgebildeten Reinfluidauslass (212) aufweist,
- das Filtergehäuse (210, 220) einen zur Aufnahme des Ringfilterelements (100) ausgebildeten Gehäusekörper (220) aufweist,
- der radial dichtende Bereich (64) derart zwischen dem Filtergehäuse (210, 220) und dem Ringfilterelement (100) anordbar ist, dass der radial dichtende Bereich (64) mittels einer definierten Kraft radial zwischen dem Filtergehäuse (210, 220), insbesondere dem ersten oder oberen Gehäuseteil (210), und dem Ringfilterelement (100) verpresst ist und
- der axial dichtende Bereich (66) derart zwischen dem ersten oder oberen Gehäuseteil (210) und dem Gehäusekörper (220) anordbar ist, dass der axial dichtende Bereich (66) mittels einer definierten Kraft axial zwischen dem ersten oder oberen Gehäuseteil (210) und dem Gehäusekörper (220) verpresst ist.

4. Ölabscheider nach einem der Ansprüche 1 bis 3, **dadurch gekennzeichnet, dass**

- das Filtergehäuse (210, 220) ein erstes oder oberes Gehäuseteil (210) mit einem zum Abführen des gefilterten Reinfluids ausgebildeten Reinfluidauslass (212) aufweist,
- das Filtergehäuse (210, 220) einen zur Aufnahme des Ringfilterelements (100) ausgebildeten Gehäusekörper (220) aufweist, und
- der radial dichtende Bereich (64) derart zwischen dem ersten oder oberen Gehäuseteil (210) des Filtergehäuses (210, 220) und einer zum Abdecken zumindest eines Bereichs einer Deckfläche (30) des Ringfilterelements (100) ausgebildeten Endscheibe (40) angeordnet ist, dass der radial dichtende Bereich (64) des Dichtelements (60) mittels einer definierten Kraft radial zwischen dem ersten oder oberen Gehäuseteil (210) und der Endscheibe (40) des Ringfilterelements (100) verpresst ist.

5. Ölabscheider nach einem der Ansprüche 1 bis 4, **dadurch gekennzeichnet, dass** der radial dichtende Bereich (64) nach Art eines O-Rings ausgebildet ist.

6. Ringfilterelement (100) für einen Ölabscheider (200) eines K[urbel]G[ehäuse]E[ntlüftungs]-Systems nach einem der vorhergehenden Ansprüche, wobei das Ringfilterelement (100) zum Abscheiden von Öl aus Fluid ausgebildet ist, umfassend mindestens ein am Ringfilterelement (100) lösbar oder unlösbar befestigtes Dichtelement (60), wobei das Ringfilterelement (100) in dem Filtergehäuse (210, 220) aufnehmbar ist, derart, dass der Innenraum des Filtergehäuses (210, 220) durch das Ringfilterelement (100) in einen Rohraum oder eine Rohseite (250) und in einen Reinraum oder eine Reinseite (240) unterteilbar ist, wobei das Dichtelement (60) einteilig ausgebildet ist und

- mindestens einen radial dichtenden Bereich (64) aufweist, der dazu ausgebildet ist, in Richtung des Radius (120) des Ringfilterelements (100) zu wirken und
- mindestens einen axial dichtenden Bereich (66) aufweist, der dazu ausgebildet ist, in Richtung der Längsachse (110) des Ringfilterelements (100) zu wirken,

**dadurch gekennzeichnet, dass**

der radial dichtende Bereich (64) innerhalb des Filtergehäuses anordenbar und dazu ausgebildet ist, die Rohseite (250) gegenüber der Reinseite (240) abzudichten und
- der axial dichtende Bereich (66) zwischen den zwei Teilen des Filtergehäuses anordenbar und dazu ausgebildet ist, den Innenraum des Filtergehäuses (210, 220) gegenüber der Umgebung abzudichten, wobei
- der radial dichtende Bereich (64) mit axialem und radialem Abstand zum axial dichtenden Bereich (66) angeordnet ist; wobei
- der radial dichtende Bereich (64) und der axial dichtende Bereich (66) in Richtung der Längsachse (110) des Ringfilterelements (100) versetzt zueinander angeordnet sind, wobei der radial dichtende Bereich (64) der Strömungsrichtung des zu filternden Fluids folgend oberhalb des axial dichtenden Bereichs (66) angeordnet ist.

7. Ringfilterelement nach Anspruch 6, **gekennzeichnet durch**

- mindestens ein zum Abscheiden von Öl aus Fluid, insbesondere aus einem Aerosol, ausgebildetes ringförmig, insbesondere kreisringförmig oder ovalringförmig, angeordnetes, beispielsweise gewickeltes Filtermedium (10) und
- mindestens eine sich parallel zur Strömungsrichtung (20) des das Filtermedium (10) durchströmenden Fluids erstreckende Deckfläche (30) und mindestens eine an der Deckfläche (30) angeordnete Endscheibe (40), wobei das Dichtelement (60) an der Endscheibe (40) lösbar oder unlösbar befestigt ist.

8. Ringfilterelement nach Anspruch 7, **dadurch gekennzeichnet, dass** die Endscheibe (40) eine zum Befestigen des Dichtelements (60) am Ringfilterelement (100) ausgebildete Befestigungskontur (44), insbesondere eine Nut, aufweist, in welcher der radial dichtende Bereich (64) des Dichtelements (60) anordbar, insbesondere festklemmbar, ist.

9. Ringfilterelement nach einem der Ansprüche 6 bis 8, **dadurch gekennzeichnet, dass** das Dichtelement die Unterkante der Endscheibe nach unten überragt oder die untere Axialdichtfläche des Dichtelements unterhalb der Unterkante der Endscheibe angeordnet ist.

10. Ringfilterelement nach mindestens einem der Ansprüche 6 bis 9, **dadurch gekennzeichnet, dass** die Endscheibe (40) eine sich in Richtung der Längsachse (110) des Ringfilterelements (100) erstreckende Stützkontur (46) aufweist, die dazu ausgebildet ist, eine dem Ringfilterelement (100) zugewandte Seite des Dichtelements (60) zu führen und/oder zu halten.

11. Verfahren zum Öffnen des Filtergehäuses (210, 220) eines nach Anspruch 1 ausgebildeten Ölabscheiders (200) mit mindestens einem im Filtergehäuse (210, 220) auswechselbar angeordneten und nach mindestens einem der Ansprüche 6 bis 10 ausgebildeten Ringfilterelement (100), **dadurch gekennzeichnet, dass** zum Öffnen des Filtergehäuses (210, 220) der erste oder obere Gehäuseteil (210) mittels einer Kippbewegung oder mittels einer Rotationsbewegung um eine senkrecht zur Längsachse (110) des Gehäusekörpers (220) verlaufende Rotationsachse (320) bewegt wird.

**Claims**

1. Oil separator (200) of a P[ositive]C[rankcase]V[entilation] system, featuring a ring filter element (100) which is designed to separate oil from fluid, a sealing element (60) detachably or non-detachably attached to the ring filter element (100) and a filter housing (210, 220) with two parts designed to receive the ring filter element (100), wherein the interior area of the filter housing (210, 220) is divided by the the ring filter element (100) into a raw chamber or a raw side (250) and into a clean chamber or a clean side (240), wherein the sealing element (60) is made in one piece and
features at least one radially sealing area (64), which is designed to act in the direction of the radius (120) of the ring filter element (100) and at least one axially sealing area (66), which is designed to act in the direction of the longitudinal axis (110) of the ring filter element (100),
**characterized in that**
the radially sealing area (64) is disposed inside the filter housing and designed to seal the raw side (250) against the clean side (240) and
the axially sealing area (66) is disposed between two parts of the filter housing and designed to seal the interior area of the filter housing (210, 220) against the environment; wherein

- the radially sealing area (64) is disposed with axial and radial distance to the axially sealing area (66); wherein
- the radially sealing area (64) and the axially sealing area (66) are offset in relation to each other in the direction of the longitudinal axis (110) of the ring filter element (100), wherein the radially sealing area (64) is disposed above the axially sealing area (66) following the flow direction of the fluid to be filtered.

2. Oil separator according to claim 1, **characterized in that**

- the oil separating element (200) features a filter housing (210, 220) designed to receive the ring filter element (100),
- the filter housing (210, 220) features a first or upper housing component (210) with a clean fluid outlet (212) designed to discharge the filtered clean fluid, and
- the radially sealing area (64) of the sealing element (60) is disposed at the same level as the clean fluid outlet (212).

3. Oil separator according to one of the claims 1 to 2, **characterized in that**

- the filter housing (210, 220) features a first or upper housing component (210) with a clean fluid outlet (212) designed to discharge the filtered clean fluid,
- the filter housing (210, 220) features a housing body (220) designed to receive the ring filter element (100),
- the radially sealing area (64) can be disposed between the filter housing (210, 220) and the ring filter element (100) in such a way that the radially sealing area (64) is radially compressed between the filter housing (210, 220), in particular the first or upper housing component (210), and the ring filter element (100) by means of a defined force and
- the axially sealing area (66) can be disposed between the first or upper housing component (210) and the housing body (220) in such a way that the axially sealing area (66) is axially compressed between the first or upper housing component (210) and the housing body (220) by means of a defined force.

4. Oil separator according to one of the claims 1 to 3, **characterized in that**

- the filter housing (210, 220) features a first or upper housing component (210) with a clean fluid outlet (212) designed to discharge the filtered clean fluid,
- the filter housing (210, 220) features a housing body (220) designed to receive the ring filter element (100), and
- the radially sealing area (64) is disposed between the first or upper housing component (210) of the filter housing (210, 220) and an end disc (40) designed to cover at least one area of a cover surface (30) of the ring filter element (100) in such a way that the radially sealing area (64) of the sealing element (60) is radially compressed between the first or upper housing component (210) and the end disc (40) of the ring filter element (100) by means of a defined force.

5. Oil separator according to one of the claims 1 to 4, **characterized in that the** radially sealing area (64) is designed in the manner of an O-ring.

6. Ring filter element (100) for an oil separator (200) of a P[ositive]C[rankcase] V[entilation] system according to one of the preceding claims, wherein the ring filter element (100) is designed to separate oil from fluid, comprising at least one sealing element (60) detachably or non-detachably attached to the ring filter element (100), wherein the ring filter element (100) can be received in the filter housing (210, 220) in such a way that the interior area of the filter housing (210, 220) can be divided by the ring filter element (100) into a raw chamber or a raw side (250) and into a clean chamber or a clean side (240), wherein the sealing element (60) is made in one piece and

- at least one radially sealing area (64), which is designed to act in the direction of the radius (120) of the ring filter element (100) and
- at least one axially sealing area (66), which is designed to act in the direction of the longitudinal axis (110) of the ring filter element (100), **c**
**haracterized in that**
the radially sealing area (64) can be disposed inside the filter housing and is designed to seal the raw side (250) against the clean side (240) and
- the axially sealing area (66) can be disposed between the two parts of the filter housing and is designed to seal the interior area of the filter housing (210, 220) against the environment, wherein
- the radially sealing area (64) is disposed with axial and radial distance to the axially sealing area (66); wherein
- the radially sealing area (64) and the axially sealing area (66) are offset in relation to each other in the direction of the longitudinal axis (110) of the ring filter element (100), wherein the radially sealing area (64) is disposed above the axially sealing area (66) following the flow direction of the fluid to be filtered.

7. Ring filter element according to claim 6, **characterized by**

- at least one filter medium (10) for separating oil from fluid, in particular from an aerosol, realized in an annular shape, in particular in a circular ring shape or oval ring shape, for example wound, and
- at least one cover surface (30) extending parallel to the flow direction (20) of the fluid flowing through the filter medium (10) and at least one end disc (40) disposed at the cover surface (30), wherein the sealing element (60) is detachably or non-detachably attached to the end disc (40).

8. Ring filter element according to claim 7, **characterized in that** the end disc (40) features a holding contour (44), in particular a groove, for attaching the sealing element (60) to the ring filter element (100) and in which the radially sealing area (64) of the sealing element (60) can be disposed, in particular clamped.

9. Ring filter element according to one of the claims 6 to 8, **characterized in that** the sealing element protrudes beyond the lower edge of the end disc towards the bottom or that the lower axial sealing face of the sealing element is disposed below the lower edge of the end disc.

10. Ring filter element according to at least one of the claims 6 to 9, **characterized in that** the end disc (40) features a supporting contour (46) extending in the direction of the longitudinal axis (110) of the ring filter element (100), which supporting contour is designed to guide and/or hold a side of the sealing element (60) facing the ring filter element (100).

11. Method for opening the filter housing (210, 220) of an oil separator (200) designed according to claim 1 having at least one ring filter element (100) disposed replaceably in the filter housing (210, 220) and designed according to at least one of the claims 6 to 10, **characterized in that** for opening the filter housing (210, 220) the first or upper housing component (210) is moved by means of a tilting movement or by means of a rotational movement around a rotational axis (320) extending perpendicularly to the longitudinal axis (110) of the housing body (220).

**Revendications**

1. Séparateur d'huile (200) d'un système de V[entilation] de C[arter] de V[ilebrequin], présentant un élément filtrant annulaire (100) qui est conçu pour séparer l'huile du fluide, un élément d'étanchéité (60) fixé sur l'élément filtrant annulaire (100) de manière amovible ou inamovible et un boîtier de filtre (210, 220) avec deux parties conçu pour réceptionner l'élément filtrant annulaire (100), l'espace intérieur du boîtier de filtre (210, 220) étant divisé par l'élément filtrant annulaire (100) en un espace brut ou un côté brut (250) et en un espace pur ou côté pur (240), l'élément d'étanchéité (60) étant réalisé en un seul bloc et
présentant au moins une zone étanchante en sens radial (64) qui est conçue pour agir en direction du rayon (120) de l'élément filtrant annulaire (100) et au moins une zone étanchante en sens axial (66) qui est conçue pour agir en direction de l'axe longitudinal (110) de l'élément filtrant annulaire (100),
**caractérisé en ce que**
la zone étanchante en sens radial (64) est disposée à l'intérieur du boîtier de filtre et conçue pour étancher le côté brut (250) vis-à-vis du côté pur (240) et
la zone étanchante en sens axial (66) est disposée entre deux parties du boîtier de filtre et conçue pour étancher l'espace intérieur du boîtier de filtre (210, 220) vis-à-vis de l'environnement ;

- la zone étanchante en sens radial (64) étant disposée à une distance axiale et radiale de la zone étanchante en sens axial (66) ;

- la zone étanchante en sens radial (64) et la zone étanchante en sens axial (66) étant disposées en direction de l'axe longitudinal (110) de l'élément filtrant annulaire (100) de façon décalée les unes par rapport aux autres, la zone étanchante en sens radial (64) étant disposée au-dessus de la zone étanchante en sens axial (66) en suivant le sens du flux du fluide à filtrer.

2. Séparateur d'huile selon la revendication 1, **caractérisé en ce que**

- l'élément séparateur d'huile (200) présente un boîtier de filtre (210, 220) conçu pour réceptionner l'élément filtrant annulaire (100),
- le boîtier de filtre (210, 220) présente un premier composant ou composant supérieur de boîtier (210) avec une sortie de fluide pur (212) conçue pour évacuer le fluide pur filtré et
- la zone étanchante en sens radial (64) de l'élément d'étanchéité (60) est disposée au même niveau que la sortie de fluide pur (212).

3. Séparateur d'huile selon l'une des revendications 1 à 2, **caractérisé en ce que**

- le boîtier de filtre (210, 220) présente un premier composant ou composant supérieur de boîtier (210) avec une sortie de fluide pur (212) conçue pour évacuer le fluide pur filtré et
- le boîtier de filtre (210, 220) présente un corps de boîtier (220) conçu pour réceptionner l'élément filtrant annulaire (100),
- la zone étanchante en sens radial (64) peut être disposée entre le boîtier de filtre (210, 220) et l'élément filtrant annulaire (100) de telle manière que la zone étanchante en sens radial (64) est comprimée en sens radial au moyen d'une force définie entre le boîtier de filtre (210, 220), notamment le premier composant ou le composant supérieur de boîtier (210), et l'élément filtrant annulaire (100) et
- la zone étanchante en sens axial (66) peut être disposée entre le premier composant ou le composant supérieur de boîtier de filtre (210) et le composant de boîtier (220) de telle manière que la zone étanchante en sens axial (66) est comprimée en sens axial au moyen d'une force définie entre le premier composant ou le composant supérieur de boîtier (210) et le corps de boîtier (220).

4. Séparateur d'huile selon l'une des revendications 1 à 3, **caractérisé en ce que**

- le boîtier de filtre (210, 220) présente un premier composant ou composant supérieur de boîtier (210) avec une sortie de fluide pur (212) conçue pour évacuer le fluide pur filtré et
- le boîtier de filtre (210, 220) présente un corps de boîtier (220) conçu pour réceptionner l'élément filtrant annulaire (100), et
- la zone étanchante en sens radial (64) est disposée entre le premier composant ou composant supérieur de boîtier (210) du boîtier de filtre (210, 220) et un disque d'extrémité (40) conçu pour couvrir au moins une partie d'une surface de couverture (30) de l'élément filtrant annulaire (100) de telle manière que la zone étanchante en sens radial (64) de l'élément d'étanchéité (60) est comprimée en sens radial au moyen d'une force définie entre le premier composant ou le composant supérieur de boîtier (210) et le disque d'extrémité (40) de l'élément filtrant annulaire (100).

5. Séparateur d'huile selon l'une des revendications 1 à 4, **caractérisé en ce que** la zone étanchante en sens radial (64) est conçue à l'instar d'un joint torique.

6. Élément filtrant annulaire (100) pour un séparateur d'huile (200) d'un système de V[entilation] de C[arter] de V[ilebrequin], selon l'une des revendications précédentes, l'élément filtrant annulaire (100) étant conçu pour séparer l'huile du fluide, comprenant au moins un élément d'étanchéité (60) fixé sur l'élément filtrant annulaire (100) de manière amovible ou inamovible, l'élément filtrant annulaire (100) pouvant être réceptionner dans le boîtier de filtre (210, 220) de telle manière que l'espace intérieur du boîtier de filtre (210, 220) peut être divisé par l'élément filtrant annulaire (100) en un espace brut ou un côté brut (250) et en un espace pur ou côté pur (240), l'élément d'étanchéité (60) étant réalisé en un seul bloc et

- présentant au moins une zone étanchante en sens radial (64) qui est conçue pour agir en direction du rayon (120) de l'élément filtrant annulaire (100) et
- présentant au moins une zone étanchante en sens axial (66) qui est conçue pour agir en direction de l'axe longitudinal (110) de l'élément filtrant annulaire (100),
**caractérisé en ce que**

la zone étanchante en sens radial (64) peut être disposée à l'intérieur du boîtier de filtre et est conçue pour étancher le côté brut (250) vis-à-vis du côté pur (240) et

- la zone étanchante en sens axial (66) peut être disposée entre deux parties du boîtier de filtre et est conçue pour étancher l'espace intérieur du boîtier de filtre (210, 220) vis-à-vis de l'environnement,
- la zone étanchante en sens radial (64) étant disposée à une distance axiale et radiale de la zone étanchante en sens axial (66) ;
- la zone étanchante en sens radial (64) et la zone étanchante en sens axial (66) étant disposées en direction de l'axe longitudinal (110) de l'élément filtrant annulaire (100) de façon décalée les unes par rapport aux autres, la zone étanchante en sens radial (64) étant disposée au-dessus de la zone étanchante en sens axial (66) en suivant le sens du flux du fluide à filtrer.

7. Élément filtrant annulaire selon la revendication 6, **caractérisé par**

- au moins un milieu filtrant (10) conçu pour séparer l'huile du fluide, notamment d'un aérosol, réalisé sous forme annulaire, notamment sous forme circulaire ou sous forme d'anneau ovale, par exemple enroulé, et
- au moins une surface de couverture (30) s'étendant de manière parallèle au sens de flux (20) du fluide parcourant le milieu filtrant (10) et au moins un disque d'extrémité (40) disposé sur la surface de couverture (30), l'élément d'étanchéité (60) étant fixé sur le disque d'extrémité (40) de manière amovible ou de manière inamovible.

8. Élément filtrant annulaire selon la revendication 7, **caractérisé en ce que** le disque d'extrémité (40) présente un contour de fixation (44), notamment une rainure, conçu pour fixer l'élément d'étanchéité (60) sur l'élément filtrant annulaire (100) et dans lequel la zone étanchante en sens radial (64) de l'élément d'étanchéité (60) peut être disposée, notamment serrée.

9. Elément filtrant annulaire selon l'une des revendications 6 à 8, **caractérisé en ce que** l'élément d'étanchéité fait saillie vers le bas au-delà du bord inférieur du disque d'extrémité ou que la surface d'étanchéité axiale inférieure de l'élément d'étanchéité est située en dessous du bord inférieur du disque d'extrémité.

10. Élément filtrant annulaire selon au moins l'une des revendications 6 à 9, **caractérisé en ce que** le disque d'extrémité (40) présente un contour d'appui (46) s'étendant dans le sens de l'axe longitudinal (110) de l'élément filtrant annulaire (100), lequel contour d'appui est conçu pour guider et/ou pour maintenir un côté de l'élément d'étanchéité (60) faisant face à l'élément filtrant annulaire (100).

11. Procédé destiné à ouvrir le boîtier de filtre (210, 220) d'un séparateur d'huile (200) conçu selon la revendication 1 ayant au moins un élément filtrant annulaire (100) disposé de manière échangeable dans le boîtier de filtre (210, 220) et conçu selon au moins l'une des revendications 6 à 10, **caractérisé en ce que** pour ouvrir le boîtier de filtre (210, 220) le premier composant ou composant supérieur de boîtier (210) est déplacé au moyen d'un mouvement basculant ou au moyen d'un mouvement de rotation autour d'un axe de rotation (320) s'étendant perpendiculairement à l'axe longitudinal (110) du corps de boîtier (220).

**Fig. 1**

**Fig. 2**

**Fig. 3**

**Fig. 4**

320 — 310

**Fig. 5**

311

320

312

310

**Fig. 6**

311

350

330

**Fig. 7**

**Fig. 8**

200

214

330

350

311

310

320

212    210

**Fig. 9**

## Fig. 10

## Fig. 11

**Fig. 12 Prior Art**

# Fig. 13 Prior Art

**EP 3 101 244 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2272580 A1
- DE 102010063161 A1
- DE 20200601761 U1
- DE 102009005551 A
- DE 102011016893 A1
- DE 102013005624 A1
- WO 2005088417 A1